# EUROPEAN PATENT APPLICATION

(11) **EP 1 739 370 A1**
(43) Date of publication of application: **03.01.2007**
(21) Application number: 05727367.4
(22) Date of filing: 30.03.2005
(51) Int. Cl.: F25B 29/00, B01D 53/26, F24F 3/14, F25B 13/00

(54) **HUMIDITY CONTROLLER**

(30) Priority: 31.03.2004 JP 2004102238; 31.03.2004 JP 2004102324; 31.03.2004 JP 2004101703
(71) Applicant: DAIKIN INDUSTRIES, LTD., Osaka-shi, Osaka 566-8585 (JP)
(72) Inventor: YABU, Tomohiro, Daikin Industries, Ltd, Sakai-shi, Osaka 5918511 (JP); NARIKAWA, Yoshinori, Daikin Industries, Ltd, Sakai-shi, Osaka 5918511 (JP)
(74) Representative: HOFFMANN EITLE
(86) International application number: PCT/JP2005/006100
(87) International publication number: WO 2005/095873

(57) **Abstract**

A humidity control system (10) is provided which includes a refrigerant circuit **(60).** The refrigerant circuit **(60)** includes first and second absorbent-supported heat exchangers **(61, 62)** and performs a refrigeration cycle by the circulation of refrigerant. In addition, in the refrigerant circuit **(60),** the circulation direction of refrigerant is reversible. The first and second heat exchangers **(61, 62)** are disposed in a main casing **(11)** of a main unit **(90).** In the main unit **(90),** the distribution route of air is changed such that a first air stream is passed through either one of the first and second heat exchangers **(61, 61)** that is functioning as an evaporator while a second air stream is passed through the other heat exchanger that is functioning as a condenser. A compressor **(63)** of the refrigerant circuit **(60)** is disposed in a compressor unit **(91)** of separate installation from the main unit **(90).**

## Description

### TECHNICAL FIELD

The present invention generally relates to humidity control systems for controlling the level of humidity in the air and more specifically it relates to a humidity control system configured to accomplish adsorbent regeneration and cooling by performing a refrigeration cycle.

### BACKGROUND ART

As disclosed in, for example, Patent Document I (see below), humidity control systems, for regulating the level of humidity in the air by the use of adsorbent and by performing a refrigeration cycle, are well known in the conventional technology. Such a humidity control system is provided with two adsorption units. Each adsorption unit is made up of an adsorbent-filled mesh container and a refrigerant line which is passed completely through the mesh container. The refrigerant line of each adsorption unit is fluidly connected to a refrigerant circuit which performs a refrigeration cycle. In addition, the humidity control system is provided with dampers for effecting switching of the air which is delivered to each adsorption unit.

During the operation of the above-described humidity control system, the compressor of the refrigerant circuit operates and a refrigeration cycle is performed in which one of the two adsorption units becomes an evaporator while the other adsorption unit becomes a condenser. In addition, the direction in which the refrigerant is circulated in the refrigerant circuit is changed by controlling a four-way valve, whereby each adsorption unit alternately functions as an evaporator and as a condenser.

When the humidity control system is in a humidification mode of operation, supply air flowing from the outside to the inside of the room is directed to one adsorption unit which becomes a condenser. The supply air is humidified with moisture desorbed from the adsorbent. At that time, exhaust air flowing from the inside to the outside of the room is directed to the other adsorption unit which becomes an evaporator and the adsorbent recovers moisture present in the exhaust air. On the other hand, when the humidity control system is in a dehumidification mode of operation, supply air flowing from the outside to the inside of the room is directed to one adsorption unit which becomes an evaporator and the adsorbent adsorbs moisture present in the supply air. At that time, exhaust air flowing from the inside to the outside of the room is directed to the other adsorption unit which becomes a condenser. Moisture desorbed from the adsorbent is expelled to outside the room, together with the exhaust air.

In addition, as a means capable of functioning in the same way as the aforesaid adsorption units, a heat exchange member, as disclosed in, for example, Patent Document II (see below), has been known in the conventional technology. In this heat exchange member, plate-shaped fins are arranged around a copper pipe and adsorbent is supported on the surface of the copper pipe and on the surface of each fin. And the heat exchange member is configured such that the adsorbent is heated and cooled with fluid flowing through the copper pipe.

Additionally, as a humidity control system of the type described above, there is a humidity control system shown in Patent Document III (see below). In this humidity control system, an air passageway for fluid communication between outdoor and indoor spaces is formed in the casing and an adsorption element is disposed in the air passageway. Outdoor air (OA) is distributed through the adsorption element so that moisture present in the outdoor air (OA) is adsorbed. Then, the outdoor air (OA) is supplied, as dehumidified air (humidity controlled air (SA)), to the indoor space. In addition, it is arranged such that, for example, moisture adsorbed on the adsorption element is desorbed; the desorbed moisture is fed to outdoor air (OA); and the outdoor air (OA) is supplied, as humidified air (humidity controlled air (SA)) to the indoor space.
Patent Document I: JP H8-189667A
Patent Document II: JP H7-265649A
Patent Document III: JP H9-329371A

### DISCLOSURE OF THE INVENTION

### PROBLEMS THAT THE INVENTION INTENDS TO SOLVE

Incidentally, in the above-described conventional humidity control system, it is necessary to frequently change the circulation direction of refrigerant in the refrigerant circuit. This produces the problem in that noise is emitted every time the refrigerant circulation direction is changed. Consequently, noise generated in the humidity control system might penetrate into the room and deteriorate the level of room comfort.

With the above problem in mind, the present invention was made. Accordingly, an object of the present invention is to provide a quiet, user comfortable humidity control system by separation of the source of noise from the main casing of the humidity control system.

### MEANS FOR SOLVING THE PROBLEMS

In the present invention, a compressor unit **(91)** including a compressor **(63)** of a refrigerant circuit **(60)** is disposed outside a main casing **(11)** in order to accomplish the above object.

More specifically, a first aspect of the present invention is directed to a humidity control system for supplying either one of a dehumidified first air stream and a humidified second air stream to an indoor space and for discharging the other air stream to an outdoor space. The humidity control system of the first aspect comprises: a refrigerant circuit **(60)** which includes first and second adsorbent-supported heat exchangers **(61, 62)** which are fluidly connected in the refrigerant circuit **(60)** to perform a refrigeration cycle and which is capable of reversing the circulation direction of refrigerant; a main unit **(90)** which includes: a main casing **(11)** having therein an air passageway in which the heat exchangers **(61, 62)** are disposed; and a switching mechanism for changing the distribution route of air in the main casing **(11)** depending on the circulation direction of refrigerant in the refrigerant circuit **(60)** so that the first air stream is passed through one of the heat exchangers **(61, 62)** that is functioning as an evaporator while the second air stream is passed through the other heat exchanger that is functioning as a condenser; and a compressor unit **(91)** which is disposed outside the main casing **(11)** and in which a compressor **(63)** of the refrigerant circuit **(60)** is provided.

In the first aspect of the present invention, two different refrigeration cycles are alternately repeatedly carried out in the refrigerant circuit **(60)** by switching effected by the reversal mechanism **(64).** During the first refrigeration cycle operation, a second air stream is delivered to the first heat exchanger **(61)** which becomes a condenser while a first air stream is delivered to the second heat exchanger **(62)** which becomes an evaporator. In the first heat exchanger **(61),** the adsorbent thereof is heated by the refrigerant to become regenerated and moisture desorbed from the adsorbent is fed to the second air stream. In addition, in the second heat exchanger **(62),** the adsorbent thereof adsorbs thereon moisture present in the first air stream and the resulting heat of adsorption is absorbed by the refrigerant. On the other hand, during the second refrigeration cycle operation, the switching mechanism switches the distribution route of air to a route different from that in the first refrigeration cycle operation so that a first air stream is delivered to the first heat exchanger **(61)** which becomes an evaporator while a second air stream is delivered to the second heat exchanger **(62)** which becomes an condenser. In the first heat exchanger **(61),** the adsorbent thereof adsorbs thereon moisture present in the first air stream and the resulting heat of adsorption is absorbed by the refrigerant. In addition, in the second heat exchanger **(62),** the adsorbent thereof is heated by the refrigerant to become regenerated and moisture desorbed from the adsorbent is fed to the second air stream. The humidity control system **(10)** supplies either a dehumidified first air stream or a humidified second air stream into the room.

When there is made a change in the circulation direction of refrigerant as described above, noise is emitted from the compressor **(63).** However, in the first aspect of the present invention, the compressor unit **(91)** including the compressor **(63)** of the refrigerant circuit **(60)** is disposed outside the main casing **(11).** Since the compressor unit **(91)** can be disposed in a proper place, this makes it possible to provide a quiet, user comfortable humidity control system. More specifically, the compressor unit **(91)** which makes noise can be installed at any indoor area where such sound causes little or no annoyance. Alternatively, the main casing **(11)** is installed indoors while the compressor unit **(91)** is installed outdoors. In addition, by separate installation of the compression unit **(91),** it can correspondingly downsize the main casing **(11)** which is installed indoors.

In a second aspect of the present invention according to the above first aspect, the compressor unit **(91)** houses therein a reversal mechanism **(64)** for reversing the circulation direction of refrigerant in the refrigerant circuit **(60).** In addition, a third aspect of the present invention according to the above second aspect, the compressor unit **(91)** houses therein an expansion mechanism **(65)** of the refrigerant circuit **(60).**

According to these aspects of the present invention, the source of noise is made distant from the main casing **(11).** In addition, because of this, it becomes possible to lower the level of sound produced when the circulation direction of refrigerant is changed.

In a fourth aspect of the present invention according to the above first aspect, the compressor unit **(91)** is installed outdoors. On the other hand, in a fifth aspect of the present invention, the compressor unit **(91)** is installed in an indoor machinery room.

In these aspects of the present invention, the compressor unit **(91)** which tends to emit noise is installed outdoors or in an indoor machinery room. And the main casing **(11)** having a less number of noise sources is installed indoors, thereby making it possible to provide a quiet, user comfortable humidity control system.

In a sixth aspect of the present invention according to the above first aspect, the compressor unit **(91)** is covered with a compressor casing **(92)** which is shaped like a hermetically-sealed container.

According to the sixth aspect of the present invention, emissions of noise from the compressor are confined within the compressor casing **(92),** which is effective as a noise measure, especially when installing the compressor unit **(91)** which emits noise in an indoor area where the noise causes little or no annoyance.

In a seventh aspect of the present invention according to the above first aspect, the main casing **(11)** is shaped like a flattened box; and an air supplying fan **(25)** and an air exhausting fan **(26)** for introduction of air into the main casing **(11)** are each formed by a respective multi-blade fan which is configured to draw in air from a lateral side of a fan casing thereof and then deliver it forward, and which is disposed such that the center of axle of its impeller is oriented in the thickness direction of the main casing **(11).**

In the seventh aspect of the present invention, since the compressor **(63)** is disposed outside the main casing **(11),** the thickness of the main casing **(11)** is not constrained by the height of the compressor **(63).** And if a thin fan, whose overall fan size in the direction of the center of axle of its impeller is small relative to the diameter of the impeller, is disposed such that its impeller's axle center is oriented in the thickness direction of the main casing **(11),** this makes it possible to reduce the thickness of the main casing **(11).**

In an eighth aspect of the present invention according to the above first aspect, the first and second heat exchangers **(61, 62)** are arranged such that air flows in the thickness direction of the main casing **(11).**

In the eighth aspect of the present invention, since the first and second heat exchangers **(61, 62)** are arranged such that the thickness direction of the main casing **(11)** approximately agrees with the thickness direction of each of the first and second heat exchangers **(61, 62),** this makes it possible to reduce the thickness of the main casing **(11)** to a further extent.

In a ninth aspect of the present invention according to the above first aspect, an outlet opening **(24)** and an inlet opening **(22)** are opened to provide fluid connection with ducts **(72, 74)** in fluid communication with the indoor space and an outlet opening **(23)** and an inlet opening **(21)** are opened to provide fluid connection with ducts **(71, 73)** in fluid communication with the outdoor space, in the main casing **(11).**

In the ninth aspect of the present invention, the humidity control system is installed in a most suitable place by making utilization of the ducts **(71, 72, 73, 74)** for establishing fluid communication between each of the indoor and outdoor spaces and the main casing **(11).**

In a tenth aspect of the present invention, the humidity control system is installed in an under-roof space. In addition, in an eleventh aspect of the present invention, the humidity control system is installed on an indoor floor area.

According to the these aspects of the present invention, it becomes possible to provide a humidity control system which is able to significantly exert the operation/working-effect of the present invention, even when installed in a space under the roof or on an indoor floor area.

In a twelfth aspect of the present invention, an outlet opening **(24)** and an inlet opening **(22)** are opened to provide direct fluid communication between the main casing **(11)** and the indoor space and an outlet opening **(23)** and an inlet opening **(21)** are opened to provide fluid connection with ducts **(71, 73)** in fluid communication with the outdoor space, in the main casing **(11).**

In the twelfth aspect of the present invention, it is possible to make efficient use of, for example, a space under the roof because there is no need to provide the ducts **(72, 74)** in fluid communication with the indoor space.

In a thirteenth aspect of the present invention according to the above first invention, the humidity control system includes an air supplying fan **(25)** and an air exhausting fan **(26)** which are disposed in the main casing **(11);** the main casing **(11)** is shaped like a box; the main casing **(11)** has an internal space which is divided into a first space **(17)** defined along a fan side lateral plate **(13)** as a lateral plate of the main casing **(11),** and a remaining second space **(18);** and the air supplying fan **(25)** and the air exhausting fan **(26)** are disposed in the first space **(17)** and the first and second heat exchangers **(61, 62)** and the switching mechanism are disposed in the second space **(18).**

In the thirteenth aspect of the present invention, the compressor unit **(91)** with the compressor **(63)** is separately installed, thereby eliminating the need for space for the installation of the compressor **(63)** in the main casing **(11),** and the main casing **(11)** which is installed indoors can be downsized. Furthermore, in the this aspect of the present invention, the internal space of the main casing **(11)** is divided into two spaces, wherein the air supplying fan **(25)** and the air exhausting fan **(26)** are disposed in one of the two spaces that is defined along the fan side lateral plate **(13),** i.e., the first space **(17),** while the first and second heat exchangers **(61, 62)** and the switching mechanism are disposed in the other space, i.e., the second space **(18).** Consequently, the system overall size is made dramatically compact, even when compared to the case where the fans **(25, 26)** are laid out on a diagonal line of the main casing **(11),** and it becomes possible to provide a humidity control system suitable for installation even in a small area like an under-roof space.

In a fourteenth aspect of the present invention according to the above thirteenth invention, an air supplying opening **(24)** and an inside air inlet opening **(22)** which are in fluid communication with the indoor space are provided in one of lateral plates **(14, 15)** of the main casing **(11)** orthogonal to the fan side lateral plate **(13),** and an air exhausting opening **(23)** and an outside air inlet opening **(21)** which are in fluid communication with the outdoor space are provided in the other of the lateral plates **(14, 15);** in the second space **(18),** a first heat exchange chamber **(41)** in which the first heat exchanger **(61)** is accommodated and a second heat exchange chamber **(42)** in which the second heat exchanger **(62)** is accommodated are defined adjacently side by side in a direction orthogonal to the fan side lateral plate **(13);** a first air inflow path **(43)** and a first air outflow path **(44),** and a second air inflow path **(45)** and a second air outflow path **(46)** are further provided in the second space **(18),** wherein the first air inflow path **(43)** and the first air outflow path **(44)** extend along one of a pair of lateral plates **(32, 33)** facing both the first heat exchange chamber **(41)** and the second heat exchange chamber **(42)** and are superimposedly arranged in the thickness direction of the main casing **(11)** and wherein the second air inflow path **(45)** and the second air outflow path **(46)** extend along the other of the pair of lateral plates **(32, 33)** and are superimposedly arranged in the thickness direction of the main casing **(11);** and the outflow paths **(44, 46)** are in fluid communication with the first space **(17)** through fan side communication openings **(75, 76).**

In the fourteenth aspect of the present invention, air drawn into the main casing **(11)** flows into either the first or the second air inflow paths **(43, 45), passes** through either of the first or the second heat exchangers **(61, 62),** and is subjected to either of dehumidification or humidification. Subsequently, air in the first air outflow path **(44)** passes through the fan side communication opening **(76)** while air in the second air outflow path **(46)** passes through the fan side communication opening **(75).** Of these air streams in the outflow paths **(44, 46),** one air stream is discharged by the air supplying fan **(25)** and the other is discharged by the air exhausting fan **(26).**

In this aspect of the present invention, it is possible to fluidly connect the ducts **(72, 74)** in fluid communication with the indoor space with the air supplying opening **(24)** and the inside air inlet opening **(22)** which are formed in one lateral plate of the main casing **(11)** and, in addition, it is possible to fluidly connect the ducts **(71, 73)** in fluid communication with the outdoor space with the air exhausting opening **(23)** and the outside air inlet opening **(21)** which are formed in another lateral plate of the main casing **(11).** Consequently, each of the ducts **(71, 72, ...)** can be arranged straight towards the indoor or outdoor space. This facilitates arrangement of the piping of the ducts **(71, 72, ...)** and, in addition, provides installation space savings.

In a fifteenth aspect of the present invention according to the above thirteenth aspect, an air supplying opening **(24)** in fluid communication with the indoor space and an air exhausting opening **(23)** in fluid communication with the outdoor space are provided in the fan side lateral plate **(13)** of the main casing **(11)** and an inside air inlet opening **(22)** and an outside air inlet opening **(21)** are provided in a lateral plate **(12)** opposite the fan side lateral plate **(13);** in the second space **(18),** a first heat exchange chamber **(41)** in which the first heat exchanger **(61)** is accommodated and a second heat exchange chamber **(42)** in which the second heat exchanger **(62)** is accommodated are defined adjacently side by side in the longitudinal direction of the fan side lateral plate **(13);** a first air inflow path **(43)** and a second air inflow path **(45),** and a first air outflow path **(44)** and a second air outflow path **(46)** are further provided in the second space **(18),** wherein, between one of a pair of lateral plates **(32, 33)** facing both the first heat exchange chamber **(41)** and the second heat exchange chamber **(42)** and the lateral plate **(12)** opposite the fan side lateral plate **(13),** the first air inflow path **(43)** and the second air inflow path **(45)** extend along the lateral plate **(12)** and are superimposedly arranged in the thickness direction of the main casing **(11),** and wherein, between the other of the pair of lateral plates (32, 33) and the fan side lateral plate (13), the first air outflow path (44) and the second air outflow path (46) extend along the fan side lateral plate (13) and are superimposedly arranged in the thickness direction of the main casing (11); and the outflow paths (44, 46) are in fluid communication with the first space (17) through fan side communication openings (75, 76).

In the fifteenth aspect of the present invention, air drawn into the main casing (11) from the inside and outside air inlet openings (21, 22) flows into either of the first or the second air inflow paths (44, 45), passes through either of the first or the second heat exchangers (61, 62), and is subjected to either of dehumidification or humidification. Subsequently, air in the first air outflow path (44) passes through the fan side communication opening (76) while air in the second air outflow path (46) passes through the fan side communication opening (75). Of these air streams in the outflow paths (44, 46), one air stream is discharged by the air supplying fan (25) and the other air stream is discharged by the air exhausting fan (26).

In addition, in this aspect of the present invention, the first and second air inflow paths (43, 45) are arranged along one continuous side of the first and second heat exchange chambers (41, 42) which are disposed side by side in the longitudinal direction of the fan side lateral plate (13), while the first and second air outflow paths (44, 46) are arranged along the other continuous side of the first and second heat exchange chambers (41, 42). Consequently, the main casing (11) of the humidity control system has a shape which is elongated in the direction orthogonal to the fan side lateral plate (13). This allows the ducts **(71, 72, ...)** to be arranged in the longitudinal direction of the humidity control system, i.e., in the direction orthogonal to the fan side lateral plate (13), thereby making it possible to reduce space for the installation of the humidity control system in the longitudinal direction of the fan side lateral plate (13).

In a sixteenth aspect of the invention according to the above thirteenth aspect, the air supplying fan **(**25) and the air exhausting fan (26) are each formed by a respective multi-blade fan which is configured to draw in air from a lateral side of a fan casing thereof and then deliver it forward and which is disposed such that the center of axle of its impeller is oriented in the thickness direction of the main casing **(11).**

According to the sixteenth aspect of the present invention, it becomes possible to reduce the thickness of the humidity control system for the case of a fan of the thin type in which the overall fan size in the direction of the center of axle of its impeller is small relative to the impeller diameter.

In a seventeenth aspect of the present invention according to the above sixteenth aspect, the air supplying fan **(25)** is arranged such that an inlet opening **(27),** provided in the lateral side of the fan casing of the air supplying fan **(25),** faces either one of the fan side communication openings **(75, 76);** and the air exhausting fan **(26)** is arranged such that an inlet opening **(28),** provided in the lateral side of the fan casing of the air exhausting fan **(26),** faces the other of the fan side communication openings **(75, 76).**

In the seventeenth aspect of the present invention, the inlet openings **(27, 28)** on the side of the fan casing face towards the fan side communication openings **(75, 76).** Consequently, air dehumidified or humidified by the heat exchanger **(61, 62)** in either the first or the second air outflow paths **(44, 46)** is smoothly drawn from the fan side communication opening **(75, 76)** by the fan **(25, 26).** Accordingly, the efficiency of the humidity control system is improved because the resistance of air is lowered.

In an eighteenth aspect of the present invention according to the above thirteenth aspect, a piping arrangement of the refrigerant circuit **(60)** for fluid connection with the first and second heat exchangers **(61, 62)** is provided along a top plate of the main casing **(11).**

In the eighteenth aspect of the present invention, the piping of the refrigerant circuit **(60)** is arranged along the top plate of the main casing **(11).** As a result of such piping arrangement, the refrigerant circuit **(60)** can be mounted from above and the maintenance of the refrigerant circuit **(60)** can be done also from above.

In a nineteenth aspect of the present invention according to the above first aspect, the humidity control system includes an outdoor filter **(124)** which is arranged and formed along both an outside air inflow surface of the first heat exchanger **(61)** and an outside air inflow surface of the second heat exchanger **(62).**

In the nineteenth aspect of the present invention, outside air (OA) after passage through the outdoor filter **(124)** is distributed in the distribution space of the heat exchanger **(61, 62)** from the inflow surface of the heat exchanger **(61, 62).** At that time, dust particles in the outside air (OA) are trapped by the outdoor filter **(124).** And, for example, moisture present in the outside air (OA) is adsorbed by the heat exchanger **(61, 62),** whereby the outside air (OA) is dehumidified. In addition, for example, moisture adsorbed by the heat exchanger **(61, 62)** is desorbed and supplied to the outside air (OA) to humidify it.

Incidentally, the inflow surface of the heat exchanger **(61, 62)** is typically designed such that it has a relatively large area in order to reduce the vent resistance of air to be treated and distributed in the heat exchanger **(61, 62)** and to thereby enhance the efficiency of contact between the air to be treated and the heat exchanger **(61, 62).** On the other hand, in the nineteenth aspect of the present invention, the outdoor filter **(124)** is arranged and formed along the inflow surface of the heat exchanger **(61, 62).** This makes it possible to broaden the inflow area of outside air (OA) in the outdoor filter **(124),** thereby inhibiting the rise in pressure loss due to the installation of the outdoor filter **(124).** In addition, the outdoor filter **(124)** has a larger dust trapping surface, whereby dust particles present in the outside air (OA) are trapped scatteringly throughout the outdoor filter **(124).** This therefore prevents dust particles from being trapped locally in the outdoor filter **(124).** That is, the rise in vent pressure loss due to the outdoor filter **(124)** being clogged with dust is inhibited.

In a twentieth aspect of the present invention according to the above nineteenth aspect, a first passageway **(41)** in which the first heat exchanger **(61)** is disposed and a second passageway **(42)** in which the second heat exchanger **(62)** is disposed are formed in the main casing **(11);** and the outdoor filter **(124)** comprises a first filter part **(124a)** disposed in the first passageway **(41)** and a second filter part **(124b)** disposed in the second passageway **(42).**

In the twentieth aspect of the present invention, the first filter part **(124a)** is arranged and formed along the outside air (OA) inflow surface of the first heat exchanger **(61).** This therefore makes it possible to inhibit the rise in vent pressure loss due to the installation of the first filter part **(124a).** In addition, in this aspect of the present invention, the second filter part **(124b)** is arranged and formed along the outside air (OA) inflow surface of the second heat exchanger **(62).** This therefore makes it possible to inhibit the rise in vent pressure loss due to the installation of the second filter part **(124b).**

In a twenty-first aspect of the present invention according to the above twentieth aspect, the first filter part **(124a)** and the second filter part **(124b)** are made integral with each other in the outdoor filter **(124);** and the outdoor filter **(124)** is arranged such that it extends over both the outside air inflow surface of the first heat exchanger **(61)** and the outside air inflow surface of the second heat exchanger **(62).**

According to the above configuration, the first filter part **(124a)** and the second filter part **(124b)** are formed integrally with each other and they are arranged and formed along both the inflow surface of the first heat exchanger **(61)** and the inflow surface of the second heat exchanger **(62).**

In a twenty-second aspect of the present invention according to the above twenty-first aspect, the first heat exchanger **(61)** and the second heat exchanger **(62)** are disposed adjacently to each other and the inflow surface of the first heat exchanger **(61)** and the inflow surface of the second heat exchanger (62) lie on approximately the same plane, in the main casing **(11).**

In the twenty-second aspect of the present invention, the first filter part **(124a)** and the second filter part **(124b)** can be disposed adjacently to each other and, in addition, can be arranged and formed in the same plane along the inflow surface of the first heat exchanger (61) and along the inflow surface of the second heat exchanger **(62),** respectively. Accordingly, the outdoor filter **(124)** can be downsized by forming it into a single flat plate-like shape or into a sheet-like shape.

In a twenty-third aspect of the present invention according to the above nineteenth aspect, the main casing **(11)** is provided with a take-out opening **(161)** from which the outdoor filter **(124)** can be taken out.

In the twenty-third aspect of the present invention, the outdoor filter **(124)** can be taken outside the main casing **(11)** through the take-out opening **(161)** of the main casing **(11)** for maintenance.

In a twenty-fourth aspect of the present invention according to the above twentieth aspect, the humidity control system is operable to switch its operation between a first operation in which outside air is distributed first through the first filter part **(124a)** and then through the first heat exchanger **(61)** and is thereafter supplied to the indoor space while simultaneously room air is distributed first through the second heat exchanger **(62)** and then through the second filter part **(124b)** and is thereafter expelled to the outside space, and a second operation in which outside air is distributed first through the second filter part **(124b)** and then through the second heat exchanger **(62)** and is thereafter supplied to the indoor space while simultaneously room air is distributed first through the first heat exchanger **(61)** and then through the first filter part **(124a)** and is thereafter expelled to the outdoor space.

In the twenty-fourth aspect of the present invention, outside air (OA) in the first operation is passed first through the first filter part **(124a)** and then through the first heat exchanger **(61),** so that the first filter part **(124a)** traps dust particles present in the outside air (OA) distributed in the first operation. On the other hand, room air (RA) in the second operation is passed in the direction opposite to the direction in which the outside air (OA) flows in the first operation, in other words the room air (RA) is passed first through the first heat exchanger **(61)** and then through the first filter part **(124a).** Consequently, the dust particles trapped by the first filter part **(124a)** are blown away by the room air (RA) and discharged to the outdoor space, in other words the dust particles in the first filter part **(124a)** are removed.

In addition, in this aspect of the present invention, outside air (OA) in the second operation is passed first through the second filter part **(124b)** and then through the second heat exchanger **(62),** so that the second filter part **(124b)** traps dust particles present in the outside air (OA) distributed in the second operation. On the other hand, room air (RA) in the first operation is passed in the direction opposite to the direction in which the outside air (OA) flows in the second operation, in other words the room air (RA) is passed first through the second heat exchanger **(62)** and then through the second filter part **(124b).** Consequently, the dust particles trapped by the second filter part **(124b)** are blown away by the room air (RA) and discharged to the outdoor space, in other words the dust particles in the second filter part **(124b)** are removed.

In a twenty-fifth aspect of the present invention according to the twentieth aspect, the humidity control system includes an indoor filter **(123b)** which is disposed in a passageway through which room air is made to flow into either of the first or the passageways **(41, 42);** and the humidity control system is operable to switch its operation between a first operation in which outside air is distributed first through the first filter part **(124a)** and then through the first heat exchanger **(61)** and is thereafter supplied to the indoor space while simultaneously room air is distributed first through the indoor filter **(123b),** then through the second heat exchanger **(62),** and then through the second filter part **(124b)** and is thereafter expelled to the outside space, and a second operation in which outside air is distributed first through the second filter part **(124b)** and then through the second heat exchanger (62) and is thereafter supplied to the indoor space while simultaneously room air is distributed first through the indoor filter **(123b),** then through the first heat exchanger (61), and then through the first filter part **(124a)** and is thereafter expelled to the outdoor space.

In the twenty-fifth aspect of the present invention, the adhesion of dust present in the room air (RA) to the first and second heat exchangers **(61, 62)** is prevented by the indoor filter **(123b).** Besides, by repetition of the first and second operations, dust particles carried by outside air (OA) and adhering to the outdoor filter **(124)** are blown away by room air (RA) and removed therefrom.

In a twenty-sixth aspect of the present invention according to the above first or nineteenth aspect, a first passageway **(41)** in which the first heat exchanger **(61)** is disposed, a second passageway **(42)** in which the second heat exchanger **(62)** is disposed, and a room air supplying passageway through which room air is made to flow into either of the first or the second passageways **(41, 42)** are formed in the main casing **(11);** and the humidity control system includes an indoor filter **(123b)** which is disposed in the room air supplying passageway.

In the twenty-sixth aspect of the present invention, the main casing **(11)** is provided with a room air supplying passageway for fluid communication between the indoor space and the first or the second passageways **(41, 42),** and the room air supplying passageway is provided with the indoor filter **(123b).** This therefore prevents dust particles, carried by room air (RA) flowing into the second heat exchanger **(62)** in the first operation, from adhering to the second heat exchanger **(62).** On the other hand, dust particles, carried by room air (RA) flowing into the first heat exchanger **(61)** in the second operation, are prevented from adhering to the first heat exchanger **(61).**

In a twenty-seventh aspect of the present invention according to the above first or nineteenth aspect, a first passageway **(41)** in which the first heat exchanger **(61)** is disposed and a second passageway **(42)** in which the second heat exchanger **(62)** is disposed are formed in the main casing **(11);** and the humidity control system includes: a suction opening **(163)** which faces the indoor space by being in fluid connection with an air passageway which is located nearer to the indoor space than the first and second passageways **(41, 42)** in the main casing **(11);** and an indoor filter **(123b)** which is disposed in the vicinity of an opening part of the suction opening **(163).**

In the twenty-seventh aspect of the present invention, the main casing **(11)** is provided with a room air supplying passageway for fluid communication between the indoor space and the first or second passageways **(41, 42),** and the room air supplying passageway is provided with the indoor filter **(123b).** This therefore prevents dust particles, carried by room air (RA) flowing into the second heat exchanger **(62)** in the first operation, from adhering to the second heat exchanger **(62).** On the other hand, dust particles, carried by room air (RA) flowing into the first heat exchanger **(61)** in the second operation, are prevented from adhering to the first heat exchanger **(61).**

In addition, in this aspect of the present invention, the indoor filter **(123b)** is disposed in the vicinity of the opening part of the suction opening **(163)** which is so disposed as to face towards the indoor space. This therefore makes it possible for the indoor filter **(123b)** to be replaced and maintained easily from the side of the indoor space.

### EFFECTS OF THE INVENTION

As described above, according to the present invention, the compressor **(63)** which emits noise when the circulation direction of refrigerant is changed is disposed on the side of the compressor unit **(91)** which is separately installed from the main casing **(11),** thereby making it possible to provide a quiet, compact humidity control system.

In addition, in the thirteenth aspect of the present invention, the compressor **(63)** is disposed on the side of the compressor unit **(91)** which is installed separately from the main casing **(11);** the air supplying fan **(25)** and the air exhausting fan **(26)** are disposed in the first space **(17)** defined along the fan side lateral plate **(13)** in the main casing **(11),** while the first and second heat exchangers **(61, 62)** and the switching mechanism are disposed in the second space **(18).** Consequently, the main casing **(11)** is downsized, thereby making it possible to provide a humidity control system capable of easy installation in a small area such as a space under the roof.

According to the nineteenth aspect of the present invention, the outdoor filter **(124)** is arranged and formed along the outside air (OA) inflow surface of each of the heat exchangers **(61, 62).** Consequently, the inflow area of outside air (OA) in the outdoor filter **(124)** can be enlarged, thereby making it possible to inhibit the rise in pressure loss due to the installation of the outdoor filter **(124).** Furthermore, dust particles present in outside air (OA) are trapped scatteringly in the outdoor filter **(124),** thereby making it possible to inhibit the rise in pressure loss when the outdoor filter **(124)** is being clogged with dust. Accordingly, while preventing the occurrence of dust adhesion to the heat exchangers **(61, 62),** the reduction in vent pressure loss is achieved, and for example the power load of the suction fan can be reduced.

In the twentieth aspect of the present invention, both the first filter part **(124a)** for protecting the first heat exchanger **(61)** and the second filter part **(124b)** for protecting the second heat exchanger **(62)** are arranged and formed along the inflow surface of outside air (OA) in the heat exchangers **(61, 62).** This therefore inhibits the rise in pressure loss due to the installation of each of the filter parts **(124a, 124b).**

According to the twenty-first aspect of the present invention, the first filter part **(124a)** and the second filter part **(124b)** are formed integrally with each other. This therefore makes it possible to compactedly design the outdoor filter **(124).** In addition, the outdoor filter **(124)** can be taken outside the main casing **(11)** at a time for maintenance and its workability is improved.

According to the twenty-second aspect of the present invention, the first filter part **(124a)** and the second filter part **(124b)** are disposed adjacently to each other and may be formed into a single flat plate-like shape or a sheet-like shape. This therefore makes it possible to further compactedly design the outdoor filter **(124).** In addition, the installability of the outdoor filter **(124)** is improved.

According to the twenty-third aspect of the present invention, it is designed such that the outdoor filter **(124)** can be taken, through the take-out opening **(161),** outside the main casing **(11).** This therefore makes it possible to improve the maintainability of the outdoor filter **(124).**

According to the twenty-fourth aspect of the present invention, during the first and second operations, dust particles trapped in the outdoor filter **(124)** are blown away by room air (RA) and these dust particles are discharged to the outdoor space together with the room air (RA). Consequently, by alternately switchingly running the first operation and the second operation, dust particles adhering to the outdoor filter **(124)** can be automatically removed therefrom, thereby preventing the outdoor filter **(124)** from being clogged with dust. This therefore inhibits the rise in pressure loss in the outdoor filter **(124).** In addition, it becomes possible to reduce the frequency of replacement and maintenance of the outdoor filter **(124).**

According to the twenty-fifth aspect of the present invention, by alternately switchingly running the first operation and the second operation, dust particles adhering to the outdoor filter **(124)** are removed therefrom by room air (RA), thereby making it possible to inhibit the outdoor filter **(124)** from being clogged with dust. On the other hand, dust particles present in the room air (RA) are trapped by the indoor filter **(123b).** Accordingly, dust particles present in room air (RA) are inhibited from adhering to the first and second heat exchangers **(61, 62).**

According to the twenty-sixth aspect of the present invention, the indoor filter (123b) is provided in addition to the provision of the outdoor filter **(124),** whereby dust particles present in room air (RA) are inhibited from adhering to the heat exchangers **(61, 62).**

According to the twenty-seventh aspect of the present invention, the indoor filter **(123b)** is disposed on the suction opening **(163)** which faces towards the indoor space. Consequently, the indoor filter **(123b)** can be easily removed from the side of the indoor space. Accordingly, it becomes possible to accomplish improvement in workability of the replacement and maintenance of the indoor filter **(123b).**

### BRIEF DESCRIPTION OF THE DRAWINGS

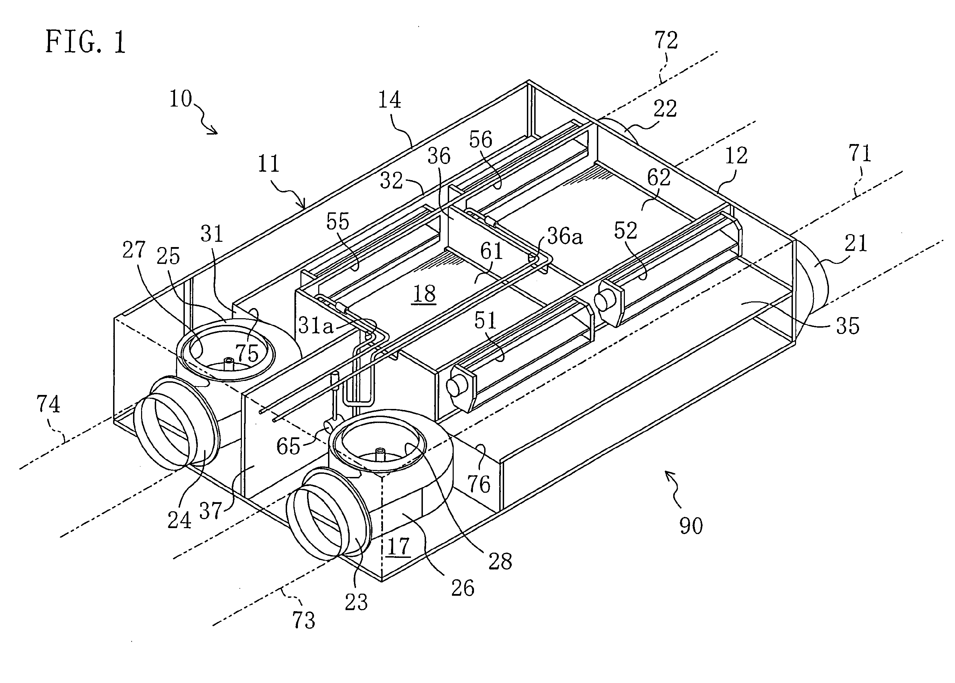

Figure **1** is a perspective view of a main unit according to a first embodiment of the present invention;

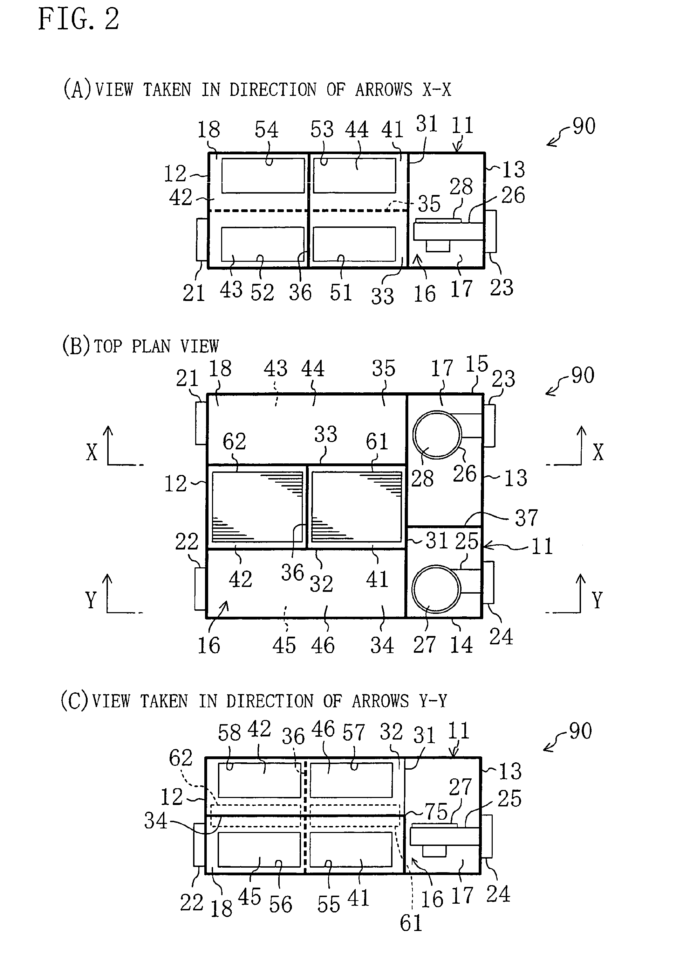

Figure **2,** comprised of Figures **2(A), 2(B), 2(C),** is a schematic constructional diagram of the main unit of the first embodiment, wherein Figure **2(A)** is a view taken in the direction of arrows X-X of Figure **2(B),** Figure **2(B)** is a top plan view of the main unit, and Figure **2(C)** is a view taken in the direction of arrows Y-Y of Figure **2(B);**

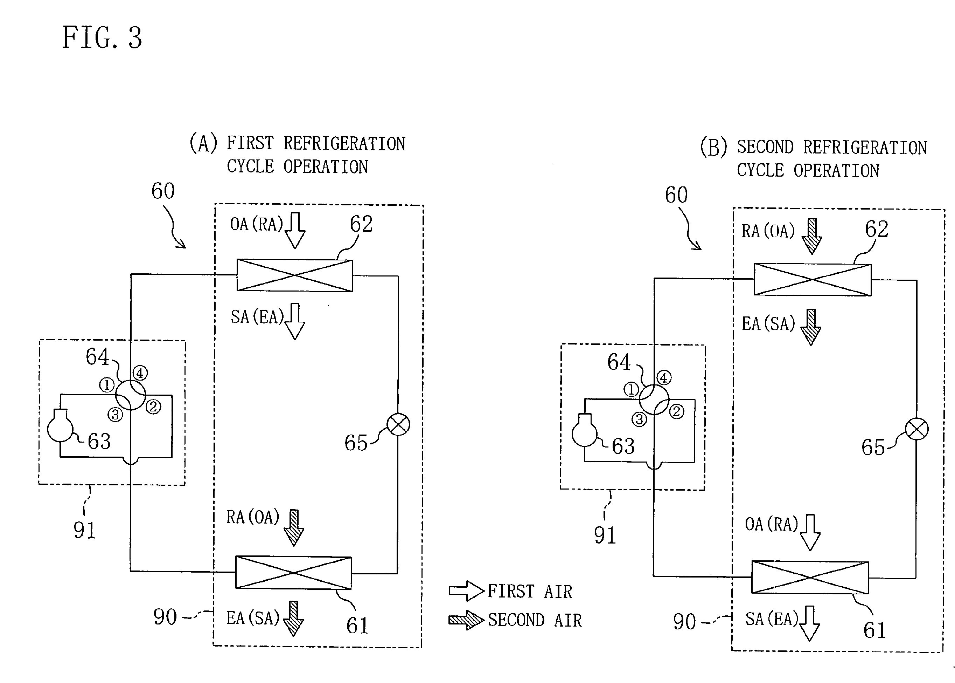

Figure **3,** comprised of Figures **3(A)** and **3(B),** is a piping system diagram of a refrigerant circuit of the first embodiment, wherein Figure **3(A)** is a diagram which shows a state in a first refrigeration cycle operation and Figure **3(B)** is a diagram which shows a state in a second refrigeration cycle operation;

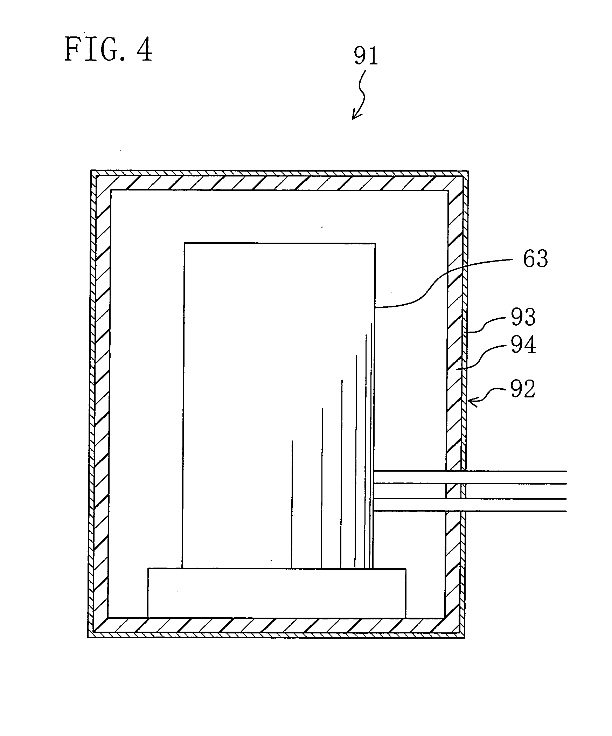

Figure **4** is a schematic cross section view of a compressor unit of the first embodiment;

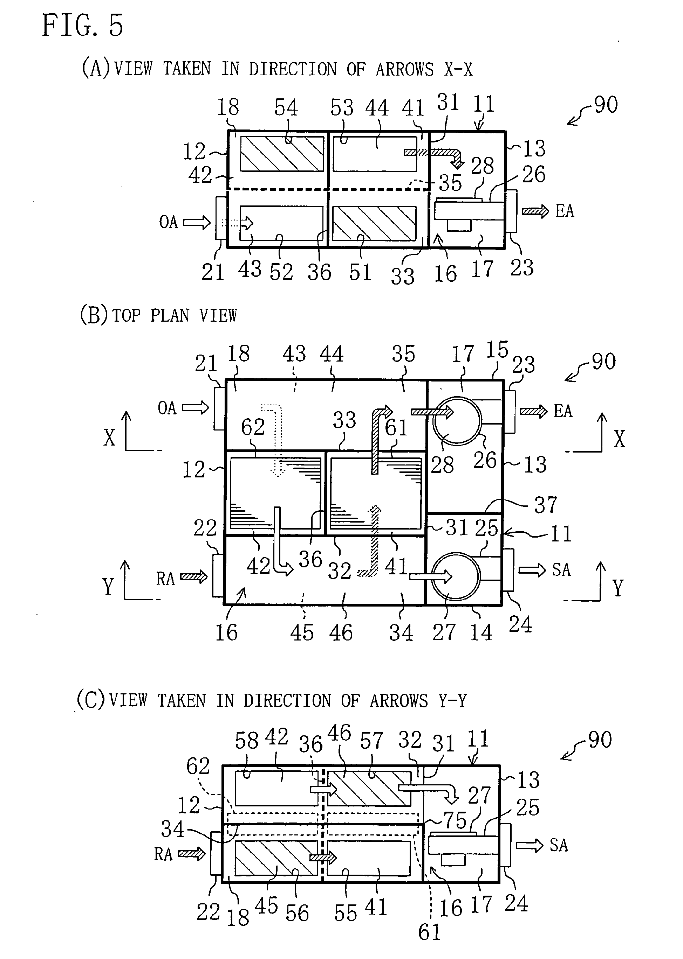

Figure **5,** comprised of Figures **5(A), 5(B),** and **5(C),** is a schematic constructional diagram of the main unit showing the flow of air in a first operation of the dehumidification mode, wherein Figure **5(A)** is a view taken in the direction of arrows X-X of Figure **5(B),** Figure 5(B) is a top plan view of the main unit, and Figure **5(C)** is a view taken in the direction of arrows Y-Y of Figure **5(B);**

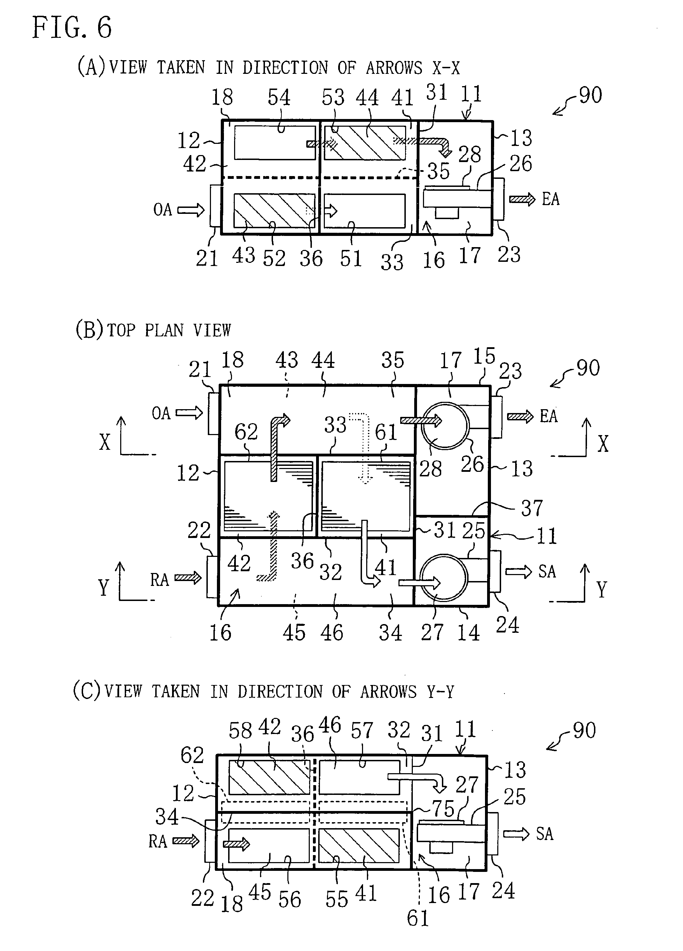

Figure 6, comprised of Figures **6(A), 6(B),** and **6(C),** is a schematic constructional diagram of the main unit showing the flow of air in a second operation of the dehumidification mode, wherein Figure **6(A)** is a view taken in the direction of arrows X-X of Figure **6(B),** Figure **6(B)** is a top plan view of the main unit, and Figure **6(C)** is a view taken in the direction of arrows Y-Y of Figure **6(B);**

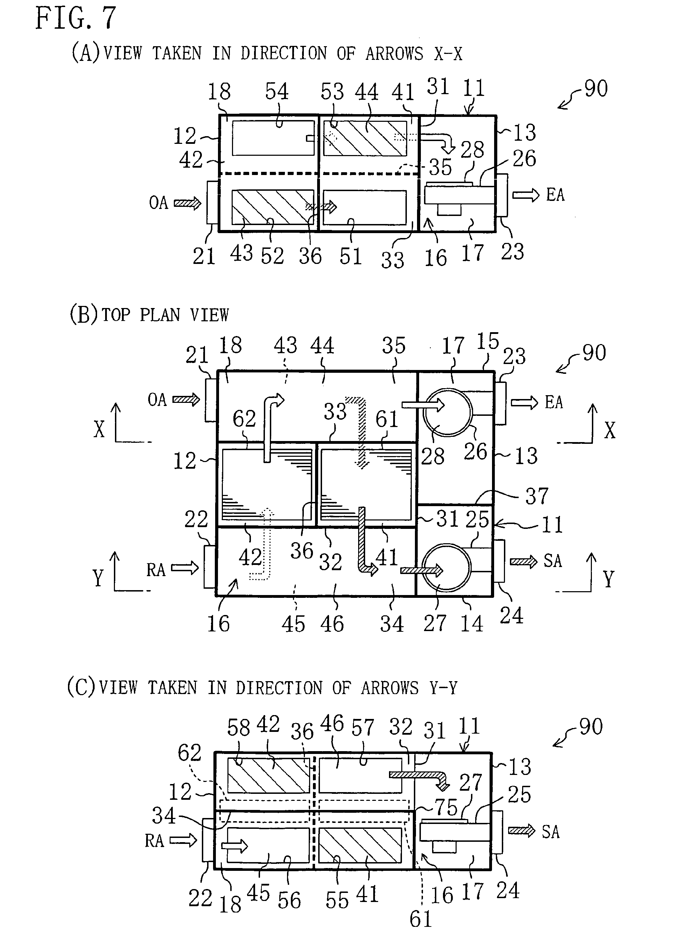

Figure 7, comprised of Figures **7(A), 7(B),** and **7(C),** is a schematic constructional diagram of the main unit showing the flow of air in a first operation of the humidification mode, wherein Figure **7(A)** is a view taken in the direction of arrows X-X of Figure **7(B),** Figure **7(B)** is a top plan view of the main unit, and Figure **7(C)** is a view taken in the direction of arrows Y-Y of Figure **7(B);**

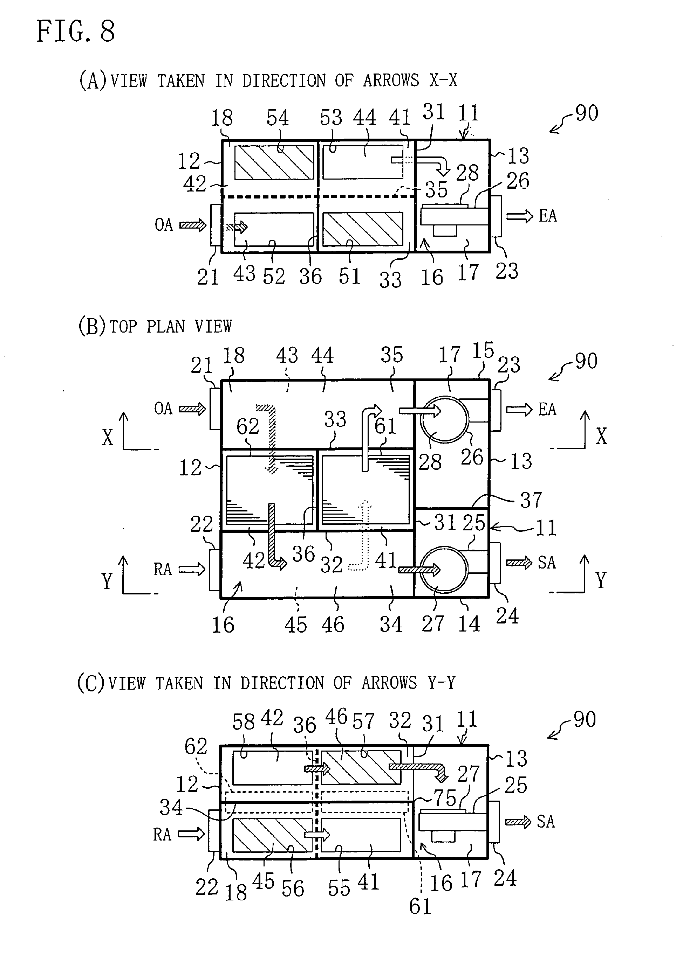

Figure **8,** comprised of Figures **8(A), 8(B),** and **8(C),** is a schematic constructional diagram of the main unit showing the flow of air in a second operation of the humidification mode, wherein Figure **8(A)** is a view taken in the direction of arrows X-X of Figure **8(B),** Figure **8(B)** is a top plan view of the main unit, and Figure **8(C)** is a view taken in the direction of arrows Y-Y of Figure **8(B);**

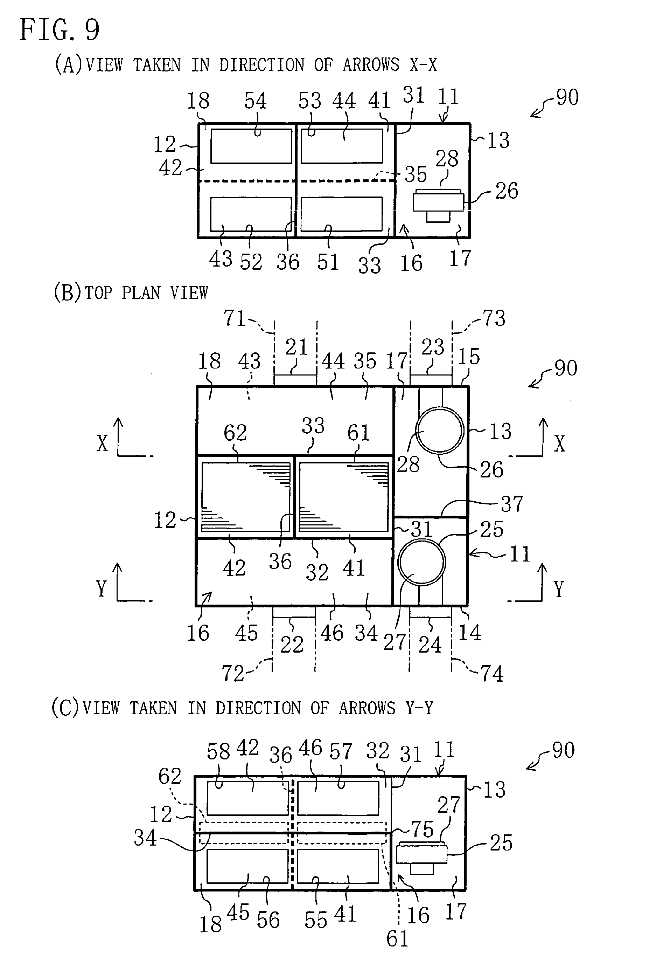

Figure 9, comprised of Figures **9(A), 9(B),** and **9(C),** is a schematic constructional diagram of a humidity control system according to a second embodiment of the present invention, wherein Figure **9(A)** is a view taken in the direction of arrows X-X of Figure **9(B),** Figure **9(B)** is a top plan view of the humidity control system, and Figure 9(C) is a view taken in the direction of arrows Y-Y of Figure **9(B);**

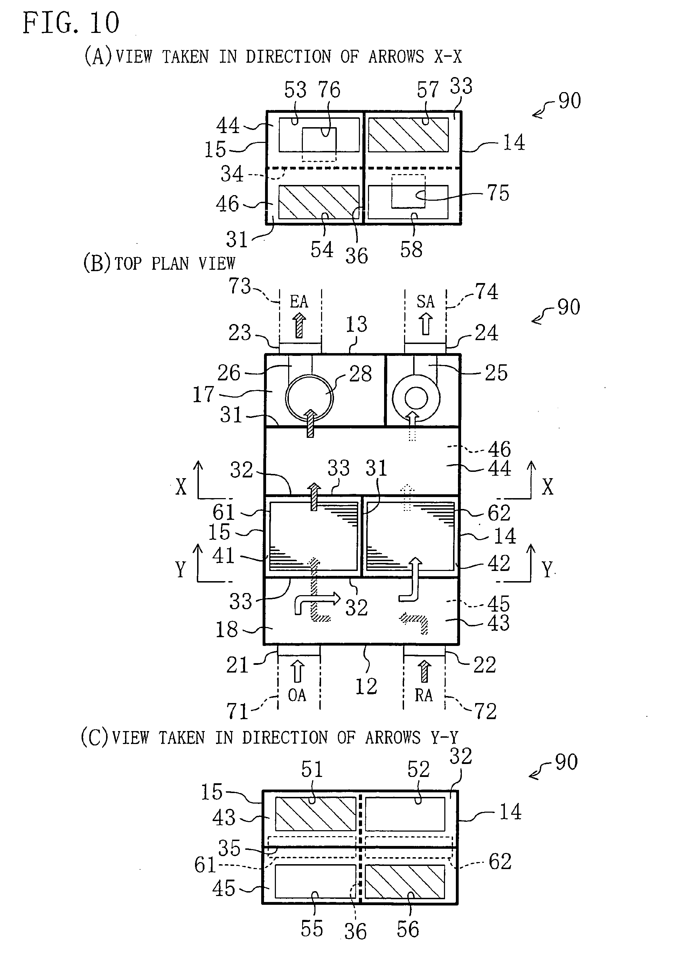

Figure **10,** comprised of Figures **10(A), 10(B),** and **10(C),** is a schematic constructional diagram of a main unit according to a third embodiment of the present invention, wherein Figure **10(A)** is a view taken in the direction of arrows X-X of Figure **10(B),** Figure **10(B)** is a top plan view of the main unit, and Figure **10(C)** is a view taken in the direction of arrows Y-Y of Figure **10(B);**

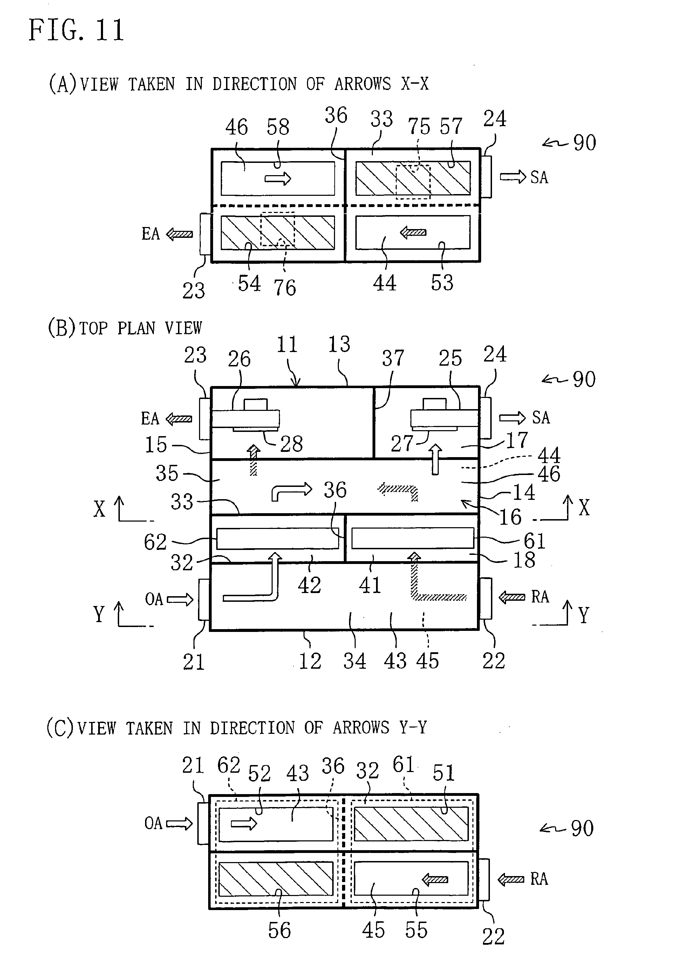

Figure **11,** comprised of Figures **11(A), 11(B),** and **11(C),** is a schematic constructional diagram of a main unit according to a fourth embodiment of the present invention, wherein Figure **11(A)** is a view taken in the direction of arrows X-X of Figure **11(B),** Figure **11(B)** is a top plan view of the main unit, and Figure **11(C)** is a view taken in the direction of arrows Y-Y of Figure **11(B);**

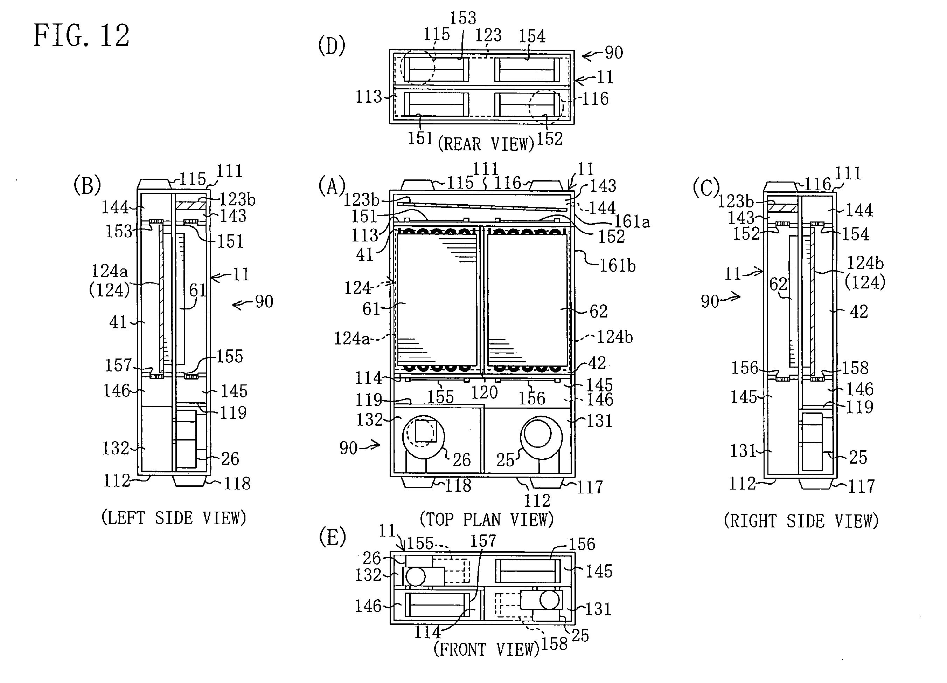

Figure **12,** comprised of Figures **12(A), 12(B), 12(C), 12(D),** and **12(E),** is a schematic constructional diagram of a humidity control system according to a fifth embodiment of the present invention, wherein Figure **12(A)** is a top plan view of a main unit, Figure **12(B)** is a view of the inside of the main unit when viewed from the left-hand side, Figure **12(C)** is a view of the inside of the humidity control system when viewed from the right-hand side, Figure **12(D)** is a view of the inside of the main unit when viewed from the rear side, and Figure **12(E)** is a view of the inside of the main unit when viewed from the front side;

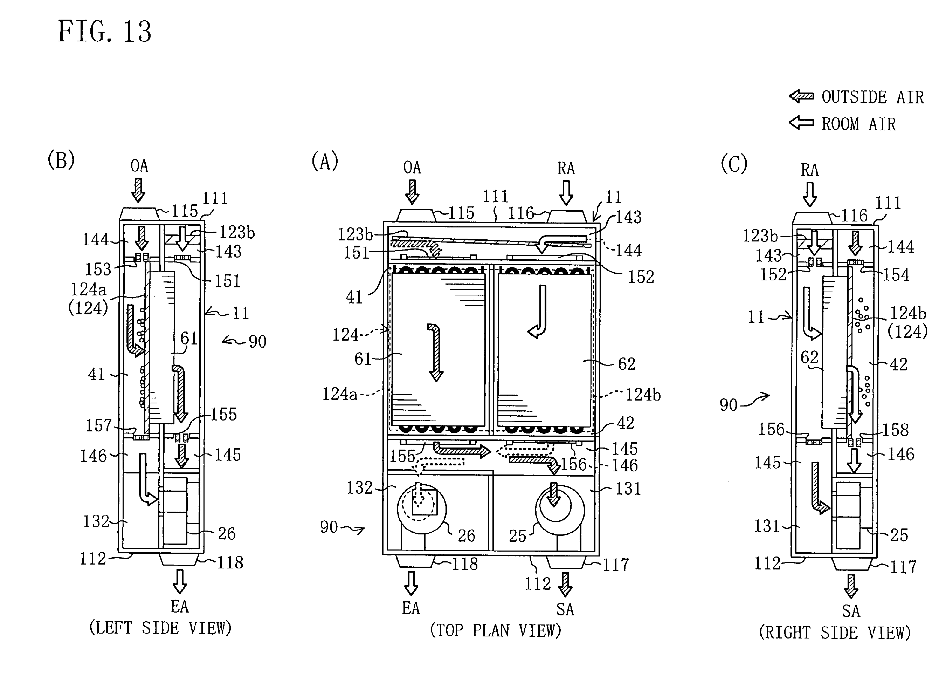

Figure **13,** comprised of Figures **13(A), 13(B),** and **13(C),** is a schematic constructional diagram of a humidity control system showing the flow of air in a first operation, wherein Figure **13(A)** is a top plan view of a main unit, Figure **13(B)** is a view of the inside of the main unit when viewed from the left-hand side, and Figure **13(C)** is a view of the inside of the main unit when viewed from the right-hand side;

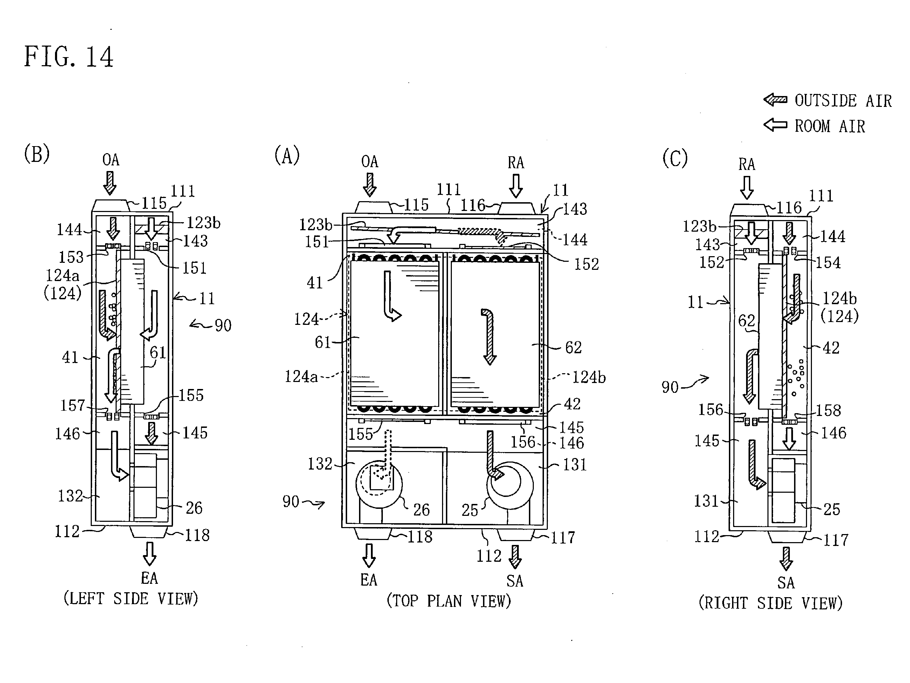

Figure **14,** comprised of Figures **14(A), 14(B),** and **14(C),** is a schematic constructional diagram of the humidity control system showing the flow of air in a second operation, wherein Figure **14(A)** is a top plan view of a main unit, Figure **14(B)** is a view of the inside of the main unit when viewed from the left-hand side, and Figure **14(C)** is a view of the inside of the main unit when viewed from the right-hand side; and

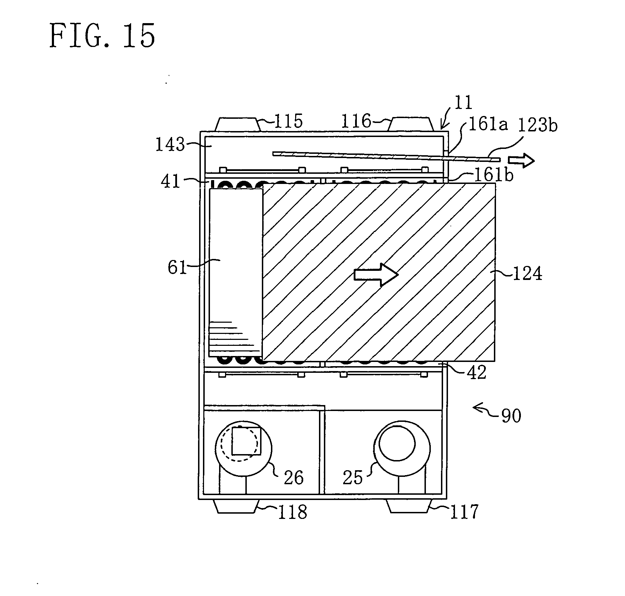

Figure **15** is a top plan view of the main unit showing an operation of taking out a filter in the main unit of the fifth embodiment.

### REFERENCE NUMERALS IN THE DRAWINGS

- 10:: humidity control system
- 11:: main casing
- 12:: first lateral plate
- 13:: second lateral plate (fan side lateral plate)
- 17:: first space
- 18:: second space
- 21:: outside air inlet opening
- 22:: inside air inlet opening
- 23:: exhaust air outlet opening (air exhausting opening)
- 24:: supply air outlet opening (air supplying opening)
- 25:: air supplying fan
- 26:: air exhausting fan
- 27:: inlet opening
- 41:: first heat exchange chamber (first passageway)
- 42:: second heat exchange chamber (second passageway)
- 43:: first air inflow path
- 44:: first air outflow path
- 45:: second air inflow path
- 46:: second air outflow path
- 60:: refrigerant circuit
- 61:: first heat exchanger
- 62:: second heat exchanger
- 63:: compressor
- 64:: four-way valve (reversal mechanism)
- 65:: motor operated expansion valve (expansion mechanism)
- 71:: outside air inlet duct
- 72:: room air inlet duct
- 73:: exhaust air outlet duct
- 74:: supply air outlet duct
- 90:: main unit

- 91:: compressor unit
- 123b:: second pre-filter (indoor filter)
- 124:: outdoor filter

### BEST MODE FOR CARRYING OUT THE INVENTION

Hereinafter, embodiments of the present invention are described with reference to the drawing figures. It should be noted, however, that the following embodiments are essentially preferable examples which are not meant to limit the present invention, its application, or its range of application.

### FIRST EMBODIMENT OF THE INVENTION

In the following, a first embodiment of the present invention is described in detail with reference to the drawings.

As shown in Figures **1** through **3,** the present embodiment provides a humidity control system **(10)** for room air dehumidification/humidification. The humidity control system **(10)** includes a main unit (90) which is installed in, for example, an indoor space under the roof and a compressor unit **(91)** which is installed outdoors. Referring to Figure **2,** Figure **2(B)** is a top plan view, Figure **2(C)** is a diagram as viewed from the direction of arrow Y, and Figure **2(A)** is a diagram as viewed from the direction of arrow X. In addition, the positional terms "right" and "left" used in the following description mean, respectively, "the right-hand side" and "the left-hand side" in Figure **2.** Figure **1** is a perspective view of the main unit (90), as viewed from the upper right side of Figure **2.**

The humidity control system **(10)** has a refrigerant circuit **(60).** The refrigerant circuit **(60)** is a closed circuit which is provided with a first heat exchanger **(61),** a second heat exchanger **(62),** a compressor **(63),** a four-way valve **(64)** as a reversal mechanism, and a motor operated expansion valve **(65)** as an expansion mechanism. The refrigerant circuit **(60)** is filled up with refrigerant. In the refrigerant circuit **(60),** a vapor compression refrigeration cycle is performed by reversible circulation of the filled refrigerant. Details about the refrigerant circuit (60) will be discussed later.

As shown in Figure 2, the main unit **(90)** has a main casing **(11)** provided with an internal air passageway in which are disposed the heat exchangers **(61, 62).** The main casing **(11)** is shaped like a flattened box which is approximately square when viewed from above. The main casing **(11)** has a left sidewall part, a right sidewall part, a front sidewall part, and a rear sidewall part. The left sidewall part is formed by a first lateral plate **(12).** The right sidewall part is formed by a second lateral plate **(13)** as a fan side lateral plate. The front sidewall part is formed by a third lateral plate **(14).** The rear sidewall part is formed by a fourth lateral plate **(15).** Note that Figure 1 omits diagrammatic representation of the second and fourth lateral plates **(13, 15)** and the top plate.

An outside air inlet opening **(21)** is formed in the first lateral plate **(12)** (i.e., the left sidewall part of the main casing **(11)).** More specifically, the outside air inlet opening **(21)** is located at a lower side portion of the first lateral plate **(12)** on the side of the fourth lateral plate **(15)** (i.e., the rear sidewall part of the main casing **(11)).** In addition, an inside air inlet opening **(22)** is also formed in the first lateral plate **(12).** More specifically, the inside air inlet opening **(22)** is located at a lower side portion of the first lateral plate **(12)** on the side of the third lateral plate **(14)** (i.e., the front sidewall part of the main casing **(11)).** On the other hand, an exhaust air outlet opening **(23)** is formed in the second lateral plate **(13)** (i.e., the right sidewall part of the main casing **(11)).** More specifically, the exhaust air outlet opening **(23)** is located at a lower side portion of the second lateral plate **(13)** on the side of the fourth lateral plate **(15).** In addition, a supply air outlet opening **(24)** is also formed in the second lateral plate **(13).** More specifically, the supply air outlet opening **(24)** is located at a lower side portion of the second lateral plate **(13)** on the side of the third lateral plate **(14).**

As indicated by chain double-dashed line in Figure **1,** an outside air inlet duct **(71)** is fluidly connected to the outside air inlet opening **(21)** of the first lateral plate **(12)** in the main casing **(11),** while a room air inlet duct **(72)** is fluidly connected to the inside air inlet opening **(22)** of the first lateral plate **(12)** in the main casing **(11).** On the other hand, an exhaust air outlet duct **(73)** is fluidly connected to the exhaust air outlet opening **(23)** of the second lateral plate **(13)** in the main casing **(11),** while a supply air outlet duct **(74)** is fluidly connected to the supply air outlet opening **(24)** of the second lateral plate **(13)** in the main casing **(11).** In the way as described above, the inside of the main casing **(11)** is brought into fluid communication with the inside and outside of the room.

As shown in Figure **2,** a first partition plate **(31)** is so mounted as to stand in the inside of the main casing **(11).** The first partition plate **(31)** is located nearer to the second lateral plate **(13)** than the horizontal center of the main casing **(11).** The main casing **(11)** has an internal space **(16)** which is divided by the first partition plate **(31)** into right and left hand portions of which the former on the right side of the first partition plate **(31)** becomes a first space (17) and of which the latter on the left side of the first partition plate **(31)** becomes a second space **(18).**

A seventh partition plate **(37)** is mounted such that it stands in the inside of the first space **(17)** of the main casing **(11).** The seventh partition plate **(37)** is located somewhat to the side of the third lateral plate **(14).** The first space **(17)** is divided by the seventh partition plate **(37)** into two portions. Of the two portions as a result of division of the first space **(17)** by the seventh partition plate **(37),** one on the side of the third lateral plate **(14)** houses therein an air supplying fan **(25)** and the other on the side of the fourth lateral plate **(15)** houses therein an air exhausting fan **(26).** The air supplying fan **(25)** and the air exhausting fan **(26)** are each formed by a multi-blade fan which draws in air from a lateral side of a fan casing thereof and then sends it forward. Furthermore, the air exhausting fan **(26)** is fluidly connected to the exhaust air outlet opening **(23).** The air supplying fan **(25)** is fluidly connected to the supply air outlet opening **(24).** Both the air supplying fan **(25)** and the air exhausting fan **(26)** are disposed such that their respective impeller axle centers are oriented in the thickness direction of the main casing **(11)** (oriented upwardly in Figure 1).

Mounted in the second space **(18)** of the main casing **(11)** are a second partition plate **(32),** a third partition plate **(33),** and a sixth partition plate **(36).** The second partition plate **(32)** is mounted such that it stands on the side of the third lateral plate **(14)** and the third partition plate **(33)** is mounted such that it stands on the side of the fourth lateral plate **(15).** And the second space **(18)** is divided, in the direction from the front to the rear side, by the second and third partition plates **(32, 33)** into three spaces. The sixth partition plate (36) is mounted in a space sandwiched between the second partition plate **(32)** and the third partition plate **(33).** The sixth partition plate **(36)** is mounted in the second space **(18)** such that it stands centrally relative to the horizontal width direction of the second space **(18).**

The space defined between the second partition plate **(32)** and the third partition plate **(33)** is divided by the sixth partition plate **(36)** into right and left hand spaces of which the former on the right side of the sixth partition plate **(36)** constitutes a first heat exchange chamber **(41)** in which is disposed the first heat exchanger **(61)** and of which the latter on the left side of the sixth partition plate **(36)** constitutes a second heat exchange chamber **(42)** in which is disposed the second heat exchanger **(62).**

An opening **(31a)** for piping arrangement, for establishing fluid communication between the first heat exchange chamber **(41)** and the first space **(17),** is formed in a longitudinally central upper side portion of the first partition plate **(31).** In addition, an opening **(36a)** for piping arrangement is formed in a longitudinally central upper side portion of the sixth partition plate **(36).**

Each of the heat exchangers **(61, 62)** is formed, in whole, into a thick, flat plate-like shape. The first heat exchanger **(61)** is so disposed as to traverse horizontally across the first heat exchange chamber **(41),** thereby allowing air to flow in the thickness direction of the main casing **(11).** Likewise, the second heat exchanger **(62)** is so disposed as to traverse horizontally across the second heat exchange chamber **(42),** thereby allowing air to flow in the thickness direction of the main casing **(11).** Details about the first and second heat exchangers **(61, 62)** will be discussed later.

A fifth partition plate **(35)** is mounted in a space of the second space **(18)** that is defined between the third partition plate **(33)** and the fourth lateral plate **(15)** of the main casing **(11).** The fifth partition plate **(35)** is so mounted as to traverse across a heightwise central portion of the space of the second space **(18),** in other words the space of the second space **(18)** is divided by the fifth partition plate **(35)** into upper and lower spaces (see Figure **2(A)),** of which the latter underlying the fifth partition plate **(35)** constitutes a first air inflow path **(43)** and of which the former overlying the fifth partition plate **(35)** constitutes a first air outflow path **(44).** In addition, the first air inflow path **(43)** is in fluid communication with the outside air inlet opening **(21),** while the first air outflow path **(44)** is in fluid communication via a second fan side communication opening **(76)** of the first partition plate **(31)** and the air exhausting fan **(26)** with the exhaust air outlet opening **(23).**

On the other hand, a fourth partition plate **(34)** is mounted in a space of the second space **(18)** that is defined between the second partition plate **(32)** and the third lateral plate **(14)** of the main casing **(11).** The fourth partition plate **(34)** is so mounted as to traverse across a heightwise central portion of the space of the second space **(18),** in other words the space of the second space **(18)** is divided by the fourth partition plate **(34)** into upper and lower spaces (see Figure **2(C)),** of which the latter underlying the fourth partition plate **(34)** constitutes a second air inflow path **(45)** and of which the former overlying the fourth partition plate **(34)** constitutes a second air outflow path **(46).** In addition, the second air inflow path **(45)** is in fluid communication with the inside air inlet opening **(22),** while the second air outflow path **(46)** is in fluid communication via a first fan side communication opening **(75)** of the first partition plate **(31)** and the air supplying fan **(25)** with the supply air outlet opening **(24).**

Referring to Figure **2(A),** four openings **(51, 52, 53, 54)** are provided in the third partition plate **(33).** The first opening (51), formed in the lower right hand portion of the third partition plate **(33),** allows fluid communication between the portion of the first heat exchange chamber **(41)** situated under the first heat exchanger **(61)** and the first air inflow path **(43).** The second opening **(52),** formed in the lower left hand portion of the third partition plate **(33),** allows fluid communication between the portion of the second heat exchange chamber **(42)** situated under the second heat exchanger **(62)** and the first air inflow path **(43).** The third opening **(53),** formed in the upper right hand portion of the third partition plate **(33),** allows fluid communication between the portion of the first heat exchange chamber **(41)** situated above the first heat exchanger **(61)** and the first air outflow path **(44).** The fourth opening **(54),** formed in the upper left hand portion of the third partition plate **(33),** allows fluid communication between the portion of the second heat exchange chamber **(42)** situated above the second heat exchanger **(62)** and the first air outflow path (44).

Referring to Figure **2(C),** four openings **(55, 56, 57, 58)** are provided in the second partition plate **(32).** The fifth opening **(55),** formed in the lower right hand portion of the second partition plate **(32),** allows fluid communication between the portion of the first heat exchange chamber **(41)** situated under the first heat exchanger **(61)** and the second air inflow path **(45).** The sixth opening **(56),** formed in the lower left hand portion of the second partition plate **(32),** allows fluid communication between the portion of the second heat exchange chamber **(42)** situated under the second heat exchanger **(62)** and the second air inflow path **(45).** The seventh opening **(57),** formed in the upper right hand portion of the second partition plate **(32),** allows fluid communication between the portion of the first heat exchange chamber **(41)** situated above the first heat exchanger **(61)** and the second air outflow path **(46).** The eighth opening **(58),** formed in the upper left hand portion of the second partition plate **(32),** allows fluid communication between the portion of the second heat exchange chamber **(42)** situated above the second heat exchanger **(62)** and the second air outflow path **(46).**

Each of the openings **(51, 52, 53, 54)** of the third partition plate **(33)** is provided with a respective openable/closable damper (not shown). Likewise, each of the openings **(55, 56, 57, 58)** of the second partition plate **(32)** is provided with a respective openable/closable damper (not shown). Each opening **(51, ..., 55, ...)** can selectively switch between the open state and the closed state by the opening/closing action of its associated damper. This makes it possible to change the distribution route of air in the main casing **(11)** depending on the refrigerant circulation direction of the refrigerant circuit **(60).**

With reference to Figure **4,** there is shown a compressor casing **(92)** which is shaped like an approximately rectangular parallelepiped, hermetically sealed container. The compressor casing **(92)** has an outer wall part **(93)** of steel and a sound proof wall part **(94)** of urethane foam. Arranged in the compressor casing **(92)** are the compressor **(63)** and the four-way valve **(64)** which are disposed in the refrigerant circuit **(60).** Figure **4** omits diagrammatical representation of the four-way valve **(64).** The sound proof wall part **(94)** prevents noises, emitted from the compressor **(63)** and from the four-way valve **(64),** from escaping to outside the compressor casing **(92).**

Referring to Figure **1** and to Figure **3,** the refrigerant circuit **(60)** is described.

The first and second heat exchangers **(61, 62)** of the refrigerant circuit **(60)** are each formed by a respective fin and tube heat exchanger of the so-called cross fin type with a heat transfer tube and a large number of fins. In addition, the first and second heat exchangers **(61, 62)** support, approximately all over their respective outer surfaces, an adsorbent such as zeolite et cetera.

The motor operated expansion valve **(65)** of the refrigerant circuit (60) is disposed on the side of the fourth lateral plate **(15)** of the first space **(17)** in the main casing **(11)**.

On the other hand, the compressor **(63)** disposed in the compressor casing **(92)** is fluidly connected, at its discharge side, to a first port of the four-way valve **(64)** and its suction side is fluidly connected to a second port of the four-way valve **(64).** One end of the first heat exchanger **(61)** is passed through the piping arrangement opening **(31a),** is extended to outside the main casing **(11)** by way of a through-hole (not shown) formed in the second lateral plate **(13)** of the main casing **(11),** and is fluidly connected to a third port of the four-way valve **(64)** by way of a through-hole (not shown) of the compressor casing **(92).** The other end of the first heat exchanger **(61)** is fluidly connected to the motor operated expansion valve **(65)** by way of the piping arrangement opening **(31a),** and is fluidly connected, again by way of the piping arrangement opening **(31a)** and then by way of the piping arrangement opening **(36a)** of the sixth partition plate **(36),** to one end of the second heat exchanger **(62).** The other end of the second heat exchanger **(62)** is fluidly extended to outside the main casing **(11)** by way of the piping arrangement openings **(31a, 36a)** and then by way of a through-hole of the second lateral plate **(13)** of the main casing **(11),** and is fluidly connected to a fourth port of the four-way valve **(64)** by way of a through-hole of the compressor casing **(92).** The compressor **(63)** is of the so-called hermetical type. Although not shown diagrammatically, the electric motor for the compressor **(63)** is supplied with electric power through an inverter.

The four-way valve **(64)** in the compressor casing **(92)** is configured such that its operation is selectively switchable between a first state (as indicated in Figure **3(A))** in which the first and third ports are brought into fluid communication with each other and the second and fourth ports are brought into fluid communication with each other, and a second state (as indicated in Figure **3(B))** in which the first and fourth ports are brought into fluid communication with each other and the second and third ports are brought into fluid communication with each other. The refrigerant circuit **(60)** is configured such that the circulation direction of refrigerant is reversed by changing the state of the four-way valve **(64),** whereby the refrigerant circuit **(60)** is allowed to selectively switch its operation between a first refrigeration cycle operation in which the first heat exchanger **(61)** functions as a condenser while the second heat exchanger **(62)** functions as an evaporator, and a second refrigeration cycle operation in which the first heat exchanger **(61)** functions as an evaporator while the second heat exchanger **(62)** functions as a condenser.

### HUMIDITY CONTROL OPERATION OF THE HUMIDITY CONTROL SYSTEM

How the humidity control system **(10)** provides humidity control is described. The humidity control system **(10)** has selectable dehumidification and humidification modes. In addition, in the humidity control system **(10),** during dehumidification and humidification modes, a first operation and a second operation are alternately repeatedly carried out at relatively short time intervals, for example, at time intervals of three minutes.

### DEHUMIDIFICATION MODE

During the dehumidification mode, the air supplying fan **(25)** and the air exhausting fan **(26)** are brought into operation in the humidity control system **(10).** The humidity control system **(10)** draws in outside air (OA) as a first air stream and supplies it into an indoor space, while on the other hand the humidity control system **(10)** draws in room air (RA) as a second air stream and discharges it to outside the indoor space.

In the first place, a first operation of the dehumidification mode is described with reference to Figures **3, 5.** In the first operation, regeneration of the adsorbent of the first heat exchanger **(61)** is accomplished while dehumidification of the outside air (OA) as a first air stream is accomplished in the second heat exchanger **(62).**

In the first operation, the four-way valve **(64)** in the refrigerant circuit **(60)** is switched to a state as indicated in Figure **3(A).** When in the state of Figure **3(A)** the compressor **(63)** is brought into operation, refrigerant is circulated in the refrigerant circuit **(60)** so that a first refrigeration cycle operation is performed in which the first heat exchanger **(61)** becomes a condenser and the second heat exchanger **(62)** becomes an evaporator.

More specifically, the refrigerant expelled from the compressor **(63)** dissipates heat and is condensed in the first heat exchanger **(61).** Subsequently, the refrigerant is delivered to the motor operated expansion valve **(65)** where it is reduced in pressure. The pressure reduced refrigerant absorbs heat and is evaporated in the second heat exchanger **(62).** Then, the refrigerant is drawn into the compressor **(63)** where it is compressed. The compressed refrigerant is again expelled from the compressor **(63).**

In addition, in the first operation, the second opening **(52),** the third opening **(53),** the fifth opening **(55),** and the eighth opening **(58)** are placed in the open state, while the first opening **(51),** the fourth opening **(54),** the sixth opening **(56),** and the seventh opening **(57)** are placed in the closed state. As shown in Figure **5,** room air (RA) as a second air stream is supplied to the first heat exchanger **(61)** and outside air (OA) as a first air stream is supplied to the second heat exchanger **(62).**

More specifically, a second air stream as an inflow from the inside air inlet opening **(22)** is delivered, through the fifth opening **(55),** into the first heat exchange chamber **(41)** from the second air inflow path **(45).** In the first heat exchange chamber **(41),** the second air stream is passed downward from above through the first heat exchanger **(61).** In the first heat exchanger **(61),** the adsorbent supported on the outer surface of the first heat exchanger **(61)** is heated by the refrigerant, and moisture is desorbed from the adsorbent. The moisture thus desorbed from the adsorbent is fed to the second air stream flowing through the first heat exchanger **(61).** The second air stream moisturized in the first heat exchanger **(61)** flows out to the first air outflow path **(44)** from the first heat exchange chamber **(41)** through the third opening **(53).** Thereafter, the second air stream is drawn into the air exhausting fan **(26)** and is discharged, through the exhaust air outlet opening **(23),** to the outside of the room as exhaust air (EA).

Meanwhile, a first air stream as an inflow from the outside air inlet opening **(21)** is delivered, through the second opening **(52),** into the second heat exchange chamber **(42)** from the first air inflow path **(43).** In the second heat exchange chamber **(42),** the first air stream is passed downward from above through the second heat exchanger **(62).** In the second heat exchanger **(62),** moisture present in the first air stream is adsorbed by the adsorbent supported on the outer surface of the second heat exchanger **(62).** The resulting heat of adsorption is absorbed by the refrigerant. The first air stream dehumidified in the second heat exchanger **(62)** flows out to the second air outflow path **(46)** from the second heat exchange chamber **(42)** through the eighth opening **(58).** Thereafter, the first air stream is drawn into the air supplying fan **(25)** and is supplied through the supply air outlet opening **(24)** into the room as supply air (SA).

Next, a second operation of the dehumidification mode is described with reference to Figure **3** and Figure **6.** In the second operation, regeneration of the adsorbent of the second heat exchanger **(62)** is accomplished and dehumidification of the outside air (OA) as a first air stream is accomplished in the first heat exchanger **(61).**

In the second operation, the four-way valve **(64)** in the refrigerant circuit **(60)** is switched to a state as indicated by Figure **3(B).** When in the state of Figure **3(B)** the compressor **(63)** is brought into operation, the refrigerant is circulated in the refrigerant circuit **(60)** so that a second refrigeration cycle operation is performed in which the first heat exchanger **(61)** becomes an evaporator and the second heat exchanger **(62)** becomes a condenser.

More specifically, the refrigerant emitted from the compressor **(63)** dissipates heat and is condensed in the second heat exchanger **(62).** Subsequently, the refrigerant is delivered to the motor operated expansion valve **(65)** where it is reduced in pressure. The pressure reduced refrigerant absorbs heat and is evaporated in the first heat exchanger **(61).** Then, the refrigerant is drawn into the compressor **(63)** where it is compressed. And the compressed refrigerant is again expelled from the compressor **(63).**

In addition, in the second operation, the first opening **(51),** the fourth opening **(54),** the sixth opening **(56),** and the seventh opening **(57)** are placed in the open state, while the second opening **(52),** the third opening **(53),** the fifth opening **(55),** and the eighth opening **(58)** are placed in the closed state. And, as shown in Figure **6,** outside air (OA) as a first air stream is supplied to the first heat exchanger **(61)** and room air (RA) as a second air stream is supplied to the second heat exchanger **(62).**

More specifically, a second air stream as an inflow from the inside air inlet opening **(22)** is delivered, through the sixth opening **(56),** into the second heat exchange chamber **(42)** from the second air inflow path **(45).** In the second heat exchange chamber (42), the second air stream is passed downward from above through the second heat exchanger **(62).** In the second heat exchanger **(62),** the adsorbent supported on the outer surface of the second heat exchanger **(62)** is heated by the refrigerant, and moisture is desorbed from the adsorbent. The moisture desorbed from the adsorbent is fed to the second air stream flowing through the second heat exchanger **(62).** The second air stream moisturized in the second heat exchanger **(62)** flows out to the first air outflow path **(44)** from the second heat exchange chamber **(42)** through the fourth opening **(54).** Thereafter, the second air stream is drawn into the air exhausting fan **(26)** and is expelled, through the exhaust air outlet opening **(23),** to the outside of the room as exhaust air (EA).

On the other hand, a first air stream as an inflow from the outside air inlet opening **(21)** is delivered, through the first opening **(51),** into the first heat exchange chamber **(41)** from the first air inflow path **(43).** In the first heat exchange chamber **(41),** the first air stream is passed downward from above through the first heat exchanger **(61).** In the first heat exchanger **(61),** moisture present in the first air stream is adsorbed by the adsorbent supported on the outer surface of the first heat exchanger **(61).** The resulting heat of adsorption is absorbed by the refrigerant. The first air stream dehumidified in the first heat exchanger **(61)** flows out to the second air outflow path **(46)** from the first heat exchange chamber **(41)** through the seventh opening **(57).** Thereafter, the first air stream is drawn into the air supplying fan **(25)** and is supplied through the supply air outlet opening **(24)** to the inside of the room as supply air (SA).

### HUMIDIFICATION MODE

During the humidification mode, the air supplying fan **(25)** and the air exhausting fan **(26)** are brought into operation in the humidity control system **(10).** The humidity control system **(10)** draws in room air (RA) as a first air stream and discharges it to outside the room while the humidity control system **(10)** draws in outside air (OA) as a second air stream and supplies it into the room.

In the first place, a first operation of the humidification mode is described with reference to Figure **3** and Figure **7.** In the first operation, humidification of the outside air (OA) as a second air stream is accomplished in the first heat exchanger **(61)** and moisture recovery from the room air (RA) as a first air stream is accomplished in the second heat exchanger **(62).**

In the first operation, the four-way valve **(64)** in the refrigerant circuit **(60)** is switched to a state as indicated by Figure **3(A).** When in the state of Figure **3(A)** the compressor **(63)** is brought into operation, the refrigerant is circulated in the refrigerant circuit **(60)** so that a first refrigeration cycle operation is performed in which the first heat exchanger **(61)** becomes a condenser and the second heat exchanger **(62)** becomes an evaporator.

Additionally, in the first operation, the first opening **(51),** the fourth opening **(54),** the sixth opening **(56),** and the seventh opening **(57)** are placed in the open state, while the second opening **(52),** the third opening **(53),** the fifth opening **(55),** and the eighth opening **(58)** are placed in the closed state. As can be seen from Figure **7,** the first heat exchanger **(61)** is supplied with outside air (OA) as a second air stream while on the other hand the second heat exchanger **(62)** is supplied with room air (RA) as a first air stream.

More specifically, a first air stream as an inflow from the inside air inlet opening **(22)** is delivered, through the sixth opening **(56),** into the second heat exchange chamber **(42)** from the second air inflow path **(45).** In the second heat exchange chamber **(42),** the first air stream is passed downward from above through the second heat exchanger **(62).** In the second heat exchanger **(62),** moisture present in the first air stream is adsorbed by the adsorbent supported on the outer surface of the second heat exchanger **(62).** The resulting heat of adsorption is absorbed by the refrigerant. Thereafter, the demoisturized first air stream sequentially passes through the fourth opening **(54),** then through the first air outflow path **(44),** and then through the air exhausting fan **(26)** and is expelled through the exhaust air outlet opening **(23)** to outside the room as exhaust air (EA).

On the other hand, a second air stream as an inflow from the outside air inlet opening **(21)** is delivered, through the first opening (51), into the first heat exchange chamber **(41)** from the first air inflow path **(43).** In the first heat exchange chamber **(41),** the second air stream is passed downward from above through the first heat exchanger **(61).** In the first heat exchanger **(61),** the adsorbent supported on the outer surface of the first heat exchanger **(61)** is heated by the refrigerant, and moisture is desorbed from the adsorbent. The moisture desorbed from the adsorbent is fed to the second air stream flowing through the first heat exchanger **(61).** Thereafter, the humidified second air stream sequentially passes through the seventh opening **(57),** then through the second air outflow path **(46),** and then through the air supplying fan **(25)** and is supplied through the supply air outlet opening **(24)** into the room as supply air (SA).

Next, a second operation of the humidification mode is described with reference to Figure **3** and Figure **8.** In the second operation, humidification of the outside air (OA) as a second air stream is accomplished in the second heat exchanger **(62)** and moisture recovery from the room air (RA) as a first air stream is accomplished in the first heat exchanger **(61).**

In the second operation, the four-way valve **(64)** in the refrigerant circuit **(60)** is switched to a state as indicated by Figure **3(B).** When in the state of Figure **3(B)** the compressor **(63)** is brought into operation, the refrigerant is circulated in the refrigerant circuit **(60)** so that a second refrigeration cycle operation is performed in which the first heat exchanger **(61)** becomes an evaporator and the second heat exchanger **(62)** becomes a condenser.

Additionally, in the second operation, the second opening **(52),** the third opening **(53),** the fifth opening **(55),** and the eighth opening **(58)** are placed in the open state, while the first opening **(51),** the fourth opening **(54),** the sixth opening **(56),** and the seventh opening **(57)** are placed in the closed state. As can be seen from Figure **8,** the first heat exchanger **(61)** is supplied with room air (RA) as a first air stream while the second heat exchanger **(62)** is supplied with outside air (OA) as a second air stream.

More specifically, a first air stream as an inflow from the inside air inlet opening (22) is delivered, through the fifth opening **(55),** into the first heat exchange chamber **(41)** from the second air inflow path **(45).** In the first heat exchange chamber **(41),** the first air stream is passed downward from above through the first heat exchanger **(61).** In the first heat exchanger **(61),** moisture present in the first air stream is adsorbed by the adsorbent supported on the outer surface of the first heat exchanger **(61).** The resulting heat of adsorption is absorbed by the refrigerant. Thereafter, the demoisturized first air stream sequentially passes through the third opening **(53),** then through the first air outflow path **(44),** and then through the air exhausting fan **(26)** and is expelled through the exhaust air outlet opening (23) to outside the room as exhaust air (EA).

On the other hand, a second air stream as an inflow from the outside air inlet opening **(21)** is delivered, through the second opening **(52),** into the second heat exchange chamber **(42)** from the first air inflow path **(43).** In the second heat exchange chamber **(42),** the second air stream is passed downward from above through the second heat exchanger **(62).** In the second heat exchanger **(62),** the adsorbent supported on the outer surface of the second heat exchanger **(62)** is heated by the refrigerant, and moisture is desorbed from the adsorbent. The moisture desorbed from the adsorbent is fed to the second air stream passing through the second heat exchanger **(62).** Thereafter, the humidified second air stream sequentially passes through the eighth opening **(58),** then through the second air outflow path **(46),** and then through the air supplying fan **(25)** and is supplied through the supply air outlet opening **(24)** into the room as supply air (SA).

### ADVANTAGEOUS EFFECTS OF THE FIRST EMBODIMENT

In the present embodiment, the compressor **(63)** is arranged on the side of the compressor unit **(91)** of separate installation from the main casing **(11);** the air supplying fan **(25)** and the air exhausting fan **(26)** are arranged in the first space **(17)** defined along the second lateral plate **(13)** in the main casing **(11);** and the first and second heat exchangers **(61, 62)** and the switching mechanism are arranged in the second space **(18).** As a result of these arrangements, the main casing **(11)** is downsized, thereby providing a humidity control system capable of easily being installed in a small space such as an under-roof space.

Furthermore, only the main unit **(90)** is installed indoors, thereby less indoor space for installation is required. In addition, since the compressor unit **(91)** which tends to emit noise is installed outdoors, thereby a quiet, user comfortable humidity control system can be provided.

In addition, since the air supplying fan **(25)** and the air exhausting fan **(26)** are arranged such that their respective impeller axle centers are oriented in the thickness direction of the main casing **(11)** (oriented upwardly in Figure **1),** thereby the thickness of the main casing **(11)** is restrained and the humidity control system **(10)** can be downsized in whole. In addition, the inlet opening **(28)** of the air exhausting fan **(26)** is arranged such that it faces towards the second fan side communication opening **(76)** of the first partition plate **(31)** in fluid communication with the first air outflow path **(44)** and the inlet opening (27) of the air supplying fan **(25)** is arranged such that it faces towards the first fan side communication opening **(75)** of the first partition plate **(31)** in fluid communication with the second air outflow path **(46).** As a result of such arrangement, air in the first air outflow path **(44)** can be smoothly drawn in from the inlet opening **(28)** of the air exhausting fan **(26)** and, in addition, air in the second air outflow path **(46)** can be smoothly drawn in from the inlet opening **(27)** of the air supplying fan **(25).**

In addition, the piping of the refrigerant circuit **(60)** is arranged along the top plate of the main casing **(11).** This piping arrangement makes it possible to install the refrigerant circuit **(60)** from above as well as to perform maintenance work on the refrigerant circuit **(60)** from above.

### SECOND EMBODIMENT OF THE INVENTION

Referring now to Figure 9, there is shown a second embodiment of the present invention. The second embodiment differs from the first embodiment in the layout position of the outside air inlet opening **(21),** the inside air inlet opening **(22),** the exhaust air outlet opening **(23),** and the supply air outlet opening **(24).** In each of the following embodiments of the present invention, the same reference numerals refer to the same parts in Figures **1** through **8** and their detailed description is omitted. In addition, the humidity control operation of the humidity control system **(10)** of the present embodiment is not described here since it is the same as the humidity control operation of the humidity control system **(10)** of the first embodiment.

The outside air inlet opening **(21)** and the exhaust air outlet opening **(23)** are formed in the fourth lateral plate **(15)** on the rear side of the main casing **(11).** More specifically, the outside air inlet opening **(21)** is located at a lower side portion of the fourth lateral plate **(15)** on the side of the first lateral plate **(12),** while the exhaust air outlet opening **(23)** is located at a lower side portion of the fourth lateral plate **(15)** on the side of the second lateral plate **(13).** On the other hand, the supply air outlet opening **(24)** and the inside air inlet opening **(22)** are formed in the third lateral plate **(14)** on the front side of the main casing **(11).** More specifically, the supply air outlet opening **(24)** is located at a lower side portion of the third lateral plate **(14)** on the side of the second lateral plate **(13),** while the inside air inlet opening **(22)** is located at a lower side portion of the third lateral plate **(14)** on the side of the first lateral plate **(12).**

As indicated by chain double-dashed line of Figure **9,** in the main casing **(11),** the outside air inlet duct **(71)** is fluidly connected to the outside air inlet opening **(21)** of the fourth lateral plate **(15)** and the exhaust air outlet duct **(73)** is fluidly connected to the exhaust air outlet opening **(23)** of the fourth lateral plate **(15),** while the room air inlet duct **(72)** is fluidly connected to the inside air inlet opening **(22)** of the third lateral plate **(14)** and the supply air outlet duct **(74)** is fluidly connected to the supply air outlet opening **(24)** of the third lateral plate **(14).**

As a result of the above, the outdoor ducts **(71, 73)** are arranged side by side in the fourth lateral plate **(15)** of the main casing **(11)** and the indoor ducts **(72, 74)** are arranged side by side in the third lateral plate **(14)** of the main casing **(11),** thereby each of the ducts (71, **72,...)** can be arranged straight towards the inside or the outside of the room.

### THIRD EMBODIMENT OF THE INVENTION

Referring now to Figure **10,** there is shown a third embodiment of the present invention. The third embodiment differs from the first embodiment in the layout of the equipment on the side of the second space **(18).**

More specifically, in the second space **(18),** the first heat exchange chamber **(41)** which houses therein the first heat exchanger **(61)** and the second heat exchange chamber **(42)** which houses therein the second heat exchanger **(62)** are adjacently formed so that they are arranged side by side in the longitudinal direction of the second lateral plate **(13).** In other words, the first heat exchange chamber **(41)** is defined on the left hand side of the second space **(18)** and the second heat exchange chamber **(42)** is defined on the right hand side of the second space **(18).**

In the second space **(18),** the first and second air inflow paths **(43, 45)** for the inflow of air are provided between one continuous side of the two heat exchange chambers **(41, 42)** and the first lateral plate **(12),** and these inflow paths extend along the first lateral plate **(12)** and are arranged superimposedly in the thickness direction of the main casing **(11).** To this arrangement, the second partition plate **(32)** is provided with four openings **(51, 52, 55, 56).**

In addition to the above, in the second space **(18),** the first and second air outflow paths **(44, 46)** for the outflow of air are provided between the other continuous side of the two heat exchange chambers **(41, 42)** and the second lateral plate **(13),** and these outflow paths extend along the second lateral plate **(13)** and are arranged superimposedly in the thickness direction of the main casing **(11).** To this arrangement, the third partition plate (33) is provided with four openings **(53, 54, 57, 58).**

The first air outflow path **(44)** is in fluid communication with the first space **(17)** through the second fan side communication opening **(76)** and the second air outflow path **(46)** is in fluid communication with the first space **(17)** through the first fan side communication opening **(75).**

### HUMIDITY CONTROL OPERATION OF THE HUMIDITY CONTROL SYSTEM

The humidity control operation of the present embodiment will be described only with respect to a first operation of the dehumidification mode. In regard to the other operations, it suffices if the four-way valve **(64)** and the dampers are switched in the same way that they are switched in the first embodiment, and their description is omitted accordingly.

In the first operation, the four-way valve **(64)** in the refrigerant circuit **(60)** is switched to a state as indicated by Figure **3(A).** When in the state of Figure **3(A)** the compressor **(63)** is brought into operation, the refrigerant is circulated in the refrigerant circuit **(60)** so that a first refrigeration cycle operation is performed in which the first heat exchanger **(61)** becomes a condenser and the second heat exchanger **(62)** becomes an evaporator.

More specifically, the refrigerant expelled from the compressor **(63)** dissipates heat and is condensed in the first heat exchanger **(61).** Subsequently, the refrigerant is delivered to the motor operated expansion valve **(65)** where it is reduced in pressure. The pressure reduced refrigerant absorbs heat and is evaporated in the second heat exchanger **(62).** Thereafter, the refrigerant is drawn into the compressor **(63)** where it is compressed. And the compressed refrigerant is again expelled from the compressor **(63).**

In addition, in the first operation, the second opening **(52),** the third opening **(53),** the fifth opening **(55),** and the eighth opening **(58)** are placed in the open state, while the first opening **(51),** the fourth opening **(54),** the sixth opening **(56),** and the seventh opening **(57)** are placed in the closed state, as shown in Figure **10.** And room air (RA) as a second air stream is supplied to the first heat exchanger **(61)** and outside air (OA) as a first air stream is supplied to the second heat exchanger **(62).**

More specifically, a second air stream as an inflow from the inside air inlet opening **(22)** is delivered, through the fifth opening **(55),** into the first heat exchange chamber **(41)** from the second air inflow path **(45).** In the first heat exchange chamber **(41),** the second air stream is passed upward from below through the first heat exchanger **(61).** In the first heat exchanger **(61),** the adsorbent supported on the outer surface of the first heat exchanger **(61)** is heated by the refrigerant, and moisture is desorbed from the adsorbent. The moisture desorbed from the adsorbent is fed to the second air stream flowing through the first heat exchanger **(61).** The second air stream moisturized in the first heat exchanger **(61)** flows out to the first air outflow path **(44)** from the first heat exchange chamber **(41)** through the third opening **(53).** Thereafter, the second air stream is drawn into the air exhausting fan **(26)** by way of the second fan side communication opening **(76)** and is discharged, through the exhaust air outlet opening **(23),** to outside the room as exhaust air (EA).

On the other hand, a first air stream as an inflow from the outside air inlet opening **(21)** is delivered, through the second opening **(52),** into the second heat exchange chamber **(42)** from the first air inflow path **(43).** In the second heat exchange chamber **(42),** the first air stream is passed upward from below through the second heat exchanger **(62).** In the second heat exchanger **(62),** moisture present in the first air stream is adsorbed by the adsorbent supported on the outer surface of the second heat exchanger **(62).** The resulting heat of adsorption is absorbed by the refrigerant. The first air stream dehumidified in the second heat exchanger **(62)** flows out to the second air outflow path **(46)** from the second heat exchange chamber **(42)** through the eighth opening **(58).** Thereafter, the first air stream is drawn into the air supplying fan **(25)** by way of the first fan side communication opening **(75)** and is supplied through the supply air outlet opening **(24)** into the room as supply air (SA).

### ADVANTAGEOUS EFFECTS OF THE THIRD EMBODIMENT

In accordance with the humidity control system **(10)** of the present embodiment, the first and second air inflow paths **(43, 45)** are provided along one continuous side of the first and second heat exchange chambers **(41, 42)** which are defined side by side in the longitudinal direction of the second lateral plate **(13),** while the first and second air outflow paths **(44, 46)** are provided along the other continuous side of the first and second heat exchange chambers **(41, 42),** and the humidity control system, i.e., the main casing **(11),** has a shape which is elongated in a direction orthogonal to the second lateral plate **(13).**

In addition, the ducts **(71, 72,...)** can be arranged in the longitudinal direction of the humidity control system **(10),** the installation space of the humidity control system **(10)** in the longitudinal direction of the second lateral plate **(13)** can be reduced, and for example the fourth lateral plate **(15)** orthogonal to the second lateral plate **(13)** can be positioned by a room wall.

### FOURTH EMBODIMENT OF THE INVENTION

Referring now to Figure **11,** there is shown a fourth embodiment of the present invention. The fourth embodiment differs from the first embodiment in the placement of the first and second heat exchangers **(61, 62).**

To sum up, the first and second heat exchangers **(61, 62)** of the present embodiment are vertically arranged so that flow of air is allowed to travel in a direction perpendicular to the thickness direction of the main casing **(11).**

In addition, in the second space **(18),** the first heat exchange chamber **(41)** which houses therein the first heat exchanger **(61)** and the second heat exchange chamber **(42)** which houses therein the second heat exchanger **(62)** are adjacently formed to each other so that they are arranged side by side in the longitudinal direction of the second lateral plate **(13).** In other words, the first heat exchange chamber **(41)** is defined on the right hand side of the second space **(18),** while the second heat exchange chamber **(42)** is defined on the left hand side of the second space **(18).**

The first and second air inflow paths **(43, 45)** for the inflow of air are provided between one continuous side of the two heat exchange chambers **(41, 42)** and the first lateral plate **(12),** and these inflow paths extend along the first lateral plate **(12)** and are arranged superimposedly in the thickness direction of the main casing **(11).** To this arrangement, the second partition plate **(32)** is provided with four openings **(51, 52, 55, 56).**

In addition, the first and second air outflow paths **(44, 46)** for the outflow of air are provided between the other continuous side of the two heat exchange chambers **(41, 42)** and the second lateral plate **(13),** and these outflow paths extend along the second lateral plate **(13)** and are arranged superimposedly in the thickness direction of the main casing **(11).** To this arrangement, the third partition plate **(33)** is provided with four openings **(53, 54, 57, 58).**

The first air outflow path **(44)** is in fluid communication with the first space **(17)** through the second fan side communication opening **(76)** and the second air outflow path **(46)** is in fluid communication with the first space **(17)** through the first fan side communication opening **(75).**

### HUMIDITY CONTROL OPERATION OF THE HUMIDITY CONTROL SYSTEM

The humidity control operation of the present embodiment will be described only with respect to a first operation of the dehumidification mode. In regard to the other operations, it suffices if the four-way valve **(64)** and the dampers are switched in the same way that they are switched in the first embodiment, and their description is omitted accordingly.

In the first operation, the four-way valve **(64)** in the refrigerant circuit **(60)** is switched to a state as indicated by Figure **3(A).** When in the state of Figure **3(A)** the compressor **(63)** is brought into operation, the refrigerant is circulated in the refrigerant circuit **(60)** so that a first refrigeration cycle operation is performed in which the first heat exchanger **(61)** becomes a condenser and the second heat exchanger **(62)** becomes an evaporator.

More specifically, the refrigerant expelled from the compressor **(63)** dissipates heat and is condensed in the first heat exchanger **(61).** Subsequently, the refrigerant is delivered to the motor operated expansion valve **(65)** where it is reduced in pressure. The pressure reduced refrigerant absorbs heat and is evaporated in the second heat exchanger **(62).** Thereafter, the refrigerant is drawn into the compressor **(63)** where it is compressed. And the compressed refrigerant is again expelled from the compressor **(63).**

In addition, in the first operation, the second opening **(52),** the third opening **(53),** the fifth opening **(55),** and the eighth opening (58) are placed in the open state, while the first opening (51), the fourth opening **(54),** the sixth opening **(56),** and the seventh opening **(57)** are placed in the closed state. And, as shown in Figure **11,** room air (RA) as a second air stream is supplied to the first heat exchanger **(61)** and outside air (OA) as a first air stream is supplied to the second heat exchanger **(62).**

More specifically, a second air stream as an inflow from the inside air inlet opening **(22)** is delivered, through the fifth opening **(55),** into the first heat exchange chamber **(41)** from the second air inflow path **(45).** In the first heat exchange chamber **(41),** the second air stream passes through the first heat exchanger **(61)** in the direction from the second partition plate **(32)** towards the third partition plate **(33).** In the first heat exchanger **(61),** the adsorbent supported on the outer surface of the first heat exchanger **(61)** is heated by the refrigerant, and moisture is desorbed from the adsorbent. The moisture desorbed from the adsorbent is fed to the second air stream passing through the first heat exchanger **(61).** The second air stream moisturized in the first heat exchanger **(61)** flows out to the first air outflow path **(44)** from the first heat exchange chamber **(41)** through the third opening **(53).** Thereafter, the second air stream is drawn into the air exhausting fan **(26)** by way of the second fan side communication opening **(76)** and is discharged, through the exhaust air outlet opening **(23),** to outside the room as exhaust air (EA).

On the other hand, a first air stream as an inflow from the outside air inlet opening **(21)** is delivered, through the second opening **(52),** into the second heat exchange chamber **(42)** from the first air inflow path **(43).** In the second heat exchange chamber **(42),** the first air stream passes through the second heat exchanger **(62)** in the direction from the second partition plate **(32)** towards the third partition plate **(33).** In the second heat exchanger **(62),** moisture present in the first air stream is adsorbed by the adsorbent supported on the outer surface of the second heat exchanger **(62).** The resulting heat of adsorption is absorbed by the refrigerant. The first air stream dehumidified in the second heat exchanger **(62)** flows out to the second air outflow path **(46)** from the second heat exchange chamber **(42)** through the eighth opening **(58).** Thereafter, the first air stream is drawn into the air supplying fan **(25)** by way of the first fan side communication opening **(75)** and is supplied through the supply air outlet opening **(24)** into the room as supply air (SA).

In accordance with the humidity control system **(10)** of the present embodiment, its depthwise width in Figure **11** can be reduced.

### FIFTH EMBODIMENT OF THE INVENTION

In the following, a humidity control system **(10)** in accordance with a fifth embodiment of the present invention is described.

The humidity control system **(10)** of the present embodiment includes a main unit **(90)** and a compressor unit **(91).** The compressor unit **(91)** of the present embodiment is constructed in the same way that the corresponding one in the first embodiment is constructed. In addition, the humidity control system **(10)** of the present embodiment is provided with a refrigerant circuit **(60).** The refrigerant circuit **(60)** is a circuit in which a first heat exchanger **(61)** and a second heat exchanger **(62)** are connected, and is constructed in the same way that the corresponding one in the first embodiment is constructed. In addition, the first and second heat exchangers **(61, 62)** of the present embodiment are identical in construction with their counterparts in the first embodiment. The description with respect to the structure of the compressor unit **(91),** the structure of the refrigerant circuit **(60),** and the structure of the first and second heat exchangers **(61, 62)** is omitted here.

With reference to Figure **12,** the main unit **(90)** of the humidity control system **(10)** in accordance with the present embodiment is described here. In Figure **12,** Figure **12(A)** is a top plan view of the main unit **(90),** Figure **12(B)** is a view of the inside of the main unit **(90)** when viewed from the left hand side, Figure **12(C)** is a view of the inside of the main unit **(90)** when viewed from the right hand side, Figure **12(D)** is a view of the inside of the humidity control system **(10)** when viewed from the rear side, and Figure **12(E)** is a view of the inside of the main unit **(90)** when viewed from the front side.

The main unit **(90)** has a main casing **(11)** which is shaped like a flattened, rectangular box, and an air passageway for providing fluid communication between the indoor and outdoor spaces is formed in the inside of the main casing **(11).** In the main casing **(11),** a first lateral plate **(111)** is formed on the rearmost side while a second lateral plate **(112)** is formed on the frontmost side.

A first inlet opening **(115),** through which outside air (OA) from the outdoor space is drawn in, is formed in a lower side portion of the first lateral plate **(111)** situated on the left hand side thereof, while a second inlet opening **(116),** through which room air (RA) from the indoor space is drawn in, is formed in an upper side portion of the second lateral plate **(112)** situated on the right hand side thereof. On the other hand, an air exhausting opening **(118),** through which exhaust air (EA) is discharged to the outdoor space, is formed in an upper side portion of the second lateral plate **(112)** situated on the left hand side thereof, while an air supplying opening **(117),** through which humidity-controlled air (SA) is supplied into the indoor space, is formed in a lower side portion of the second lateral plate **(112)** situated on the right hand side thereof.

The inside of the main casing **(11)** is divided, sequentially from the rear to the front side and in the crosswise direction, into roughly four spaces by a first partition plate **(113),** a second partition plate **(114),** and an outlet side partition plate **(119).** Of these four spaces, one that is defined nearest to the second lateral plate **(112)** is divided into two spaces, i.e., a right space and a left space, of which the latter constitutes an air exhausting side passageway **(132)** and of which the former constitutes an air supplying side passageway **(131).**

The air exhausting side passageway **(132)** is divided into two spaces, a lower space and an upper space, of which the latter is brought into fluid communication with the outdoor space through the air exhausting opening **(118).** In addition, the upper space of the air exhausting side passageway **(132)** contains therein an air exhausting fan **(26).** On the other hand, the inlet opening of the air exhausting fan **(26)** faces the lower space of the air exhausting side passageway (132). On the other hand, the air supplying side passageway **(131)** is not divided into lower and upper spaces, but it fluidly communicates with the indoor space through the air supplying opening **(117).** The air supplying side passageway **(131)** contains therein an air supplying fan **(25).**

The space defined between the first partition plate **(113)** and the second partition plates **(114)** is divided by a central partition plate **(120)** into a first heat exchange chamber **(41)** which is a first passageway and a second heat exchange chamber **(42)** which is a second passageway.

The first heat exchange chamber **(41)** is formed on the left hand side of the central partition plate **(120)** and accommodates therein a first heat exchanger **(61).** As shown in Figure **12(B),** the first heat exchanger **(61)** is arranged vertically centrally in the first heat exchange chamber **(41).** The first heat exchange chamber **(41)** is divided by the first heat exchanger **(61)** into an upper space and a lower space. In addition, the first heat exchanger **(61)** is formed into a flattened rectangular shape, and has an upper surface and a lower surface each of which has a larger area than that of the other surfaces in the first heat exchange chamber **(41).** Furthermore, there is defined a distribution space in the first heat exchanger **(61)** and air is vertically distributed in the distribution space. And an inflow surface into which outside air (OA) flows is formed in the lower side of the first heat exchanger **(61).**

In addition, in the lower side of the first heat exchanger **(61),** a first filter **(124a)** is arranged and formed along the outside air inflow surface. The first filter **(124a)** constitutes a first filter part and is arranged so as to cover the entire area of the lower side of the first heat exchanger **(61).** The first filter **(124a)** catches dust particles present in a stream of outside air flowing into the first heat exchanger **(61).**

The second heat exchange chamber **(42)** is formed on the right hand side of the central partition plate **(120)** and accommodates therein the aforesaid second heat exchanger **(62).** Like the first heat exchanger **(61),** the second heat exchanger **(62)** is arranged vertically centrally in the second heat exchange chamber **(42).** The second heat exchange chamber **(42)** is divided by the second heat exchanger **(62)** into an upper space and a lower space. In addition, like the first heat exchanger **(61),** there is defined a distribution space in the second heat exchanger **(62)** and air is vertically distributed in the distribution space. And an inflow surface into which outside air (OA) flows is formed in the lower side of the second heat exchanger **(62).**

In addition, in the lower side of the second heat exchanger **(62),** a second filter **(124b)** is arranged and formed along the outside air inflow surface. The second filter **(124b)** constitutes a second filter part and is arranged so as to cover the entire area of the lower side of the second heat exchanger **(62).** The second filter **(124b)** catches dust particles present in a stream of outside air flowing into the second heat exchanger **(62).**

The first and second filters **(124a, 124b)** integrally form an outdoor filter **(124).** The outdoor filter **(124)** is arranged such that it extends over both the inflow surface of the first heat exchanger **(61)** and the inflow surface of the second heat exchanger **(62).**

The space defined between the first lateral plate **(111)** and the first partition plate **(113)** is divided into an upper space and a lower space. The upper space constitutes a rear side upper passageway **(143)** as a room air supplying passageway, while the lower space constitutes a rear side lower passageway **(144).** The rear side upper passageway **(143)** is in fluid communication with the indoor space through the second inlet opening **(116).** In addition, an indoor filter **(123b)** is disposed in the rear side upper passageway **(143).** The indoor filter **(123b)** is provided to catch dust particles present in a stream of room air drawn in through the second inlet opening **(116).** On the other hand, the rear side lower passageway **(144)** is in fluid communication with the outdoor space through the first inlet opening **(115).**

The space defined between the second partition plate **(114)** and the outlet side partition plate **(119)** is divided into an upper space and a lower space. The upper space constitutes a front side upper passageway **(145),** while the lower space constitutes a front side lower passageway **(146).** The front side upper passageway **(145)** is in fluid communication with the air supplying side passageway **(131).** On the other hand, the front side lower passageway **(146)** is in fluid communication with the lower space of the air exhausting side passageway **(132).**

In addition, the first partition plate **(113)** is provided with a first upper rear opening **(151),** a second upper rear opening **(152),** a first lower rear opening **(153),** and a second lower rear opening **(154).** The first upper rear opening **(151)** is formed in an upper left hand portion of the first partition plate **(113)** and the second upper rear opening **(152)** is formed in an upper right hand portion of the first partition plate **(113).** In addition, the first lower rear opening **(153)** is formed in a lower left hand portion of the first partition plate **(113)** and the second lower rear opening **(154)** is formed in a lower right hand portion of the first partition plate **(113).**

Each of the first to fourth openings **(151, 152,** ...) is provided with a respective opening/closing damper. Each of the opening/closing dampers of the openings **(151, 152,** ...) is switchable between the open state and the closed state independently of the other. When the first upper rear opening **(151)** enters the open state, the rear side upper passageway **(143)** and the upper space of the first heat exchange chamber **(41)** are brought into fluid communication with each other. In addition, when the second upper rear opening **(152)** enters the open state, the rear side upper passageway **(143)** and the upper space of the second heat exchange chamber **(42)** are brought into fluid communication with each other. Furthermore, when the first lower rear opening **(153)** enters the open state, the rear side lower passageway **(144)** and the lower space of the first heat exchange chamber **(41)** are brought into fluid communication with each other. In addition, when the second lower rear opening **(154)** enters the open state, the rear side lower passageway **(144)** and the lower space of the second heat exchange chamber **(42)** are brought into fluid communication with each other.

On the other hand, the second partition plate **(114)** is provided with a first upper front opening **(155),** a second upper front opening **(156),** a first lower front opening **(157),** and a second lower front opening **(158).** The first upper front opening **(155)** is formed in an upper left hand portion of the second partition plate **(114)** and the second upper front opening **(156)** is formed in an upper right hand portion of the second partition plate **(114).** In addition, the first lower front opening **(157)** is formed in a lower left hand portion of the second partition plate **(114)** and the second lower front opening **(158)** is formed in a lower right hand portion of the second partition plate **(114).**

Each of the fifth to eighth openings **(155, 156, ...)** is provided with a respective opening/closing damper. Each of the opening/closing dampers of the openings **(155, 156,** ...) is switchable between the open state and the closed state independently of the other. When the first upper front opening **(155)** enters the open state, the front side upper passageway **(145)** and the upper space of the first heat exchange chamber **(41)** are brought into fluid communication with each other. In addition, when the second upper front opening **(156)** enters the open state, the front side upper passageway **(145)** and the upper space of the second heat exchange chamber **(42)** are brought into fluid communication with each other. Furthermore, when the first lower front opening **(157)** enters the open state, the front side lower passageway **(146)** and the lower space of the first heat exchange chamber **(41)** are brought into fluid communication with each other. In addition, when the second lower front opening **(158)** enters the open state, the front side lower passageway **(146)** and the lower space of the second heat exchange chamber **(42)** are brought into fluid communication with each other.

In addition, a right lateral plate **(110a)** of the main casing **(11)** is provided with a first take-out opening **(161a)** through which the indoor filter **(123b)** can be removed, and with a second take-out opening **(161b)** through which the outdoor filter **(124)** can be removed.

### RUNNING OPERATION

In the following, the running operation of the humidity control system **(10)** of the present embodiment is described. The humidity control system **(10)** of the present embodiment is so configured as to continuously perform either a dehumidification mode of operation or a humidification mode of operation while making alternate switching between a first operation and a second operation by changing the circulation direction of refrigerant in the refrigerant circuit **(60).**

### DEHUMIDIFICATION MODE

In a first operation of the dehumidification mode, the refrigerant circuit **(60)** enters a second state (i.e., the state as shown in Figure **3(B)),** wherein the first heat exchanger **(61)** functions as an evaporator while on the other hand the second heat exchanger **(62)** functions as a condenser. In addition, in a second operation of the dehumidification mode, the refrigerant circuit **(60)** enters a first state (i.e., the state as shown in Figure **3(A)),** wherein the first heat exchanger **(61)** functions as a condenser while on the other hand the second heat exchanger **(62)** functions as an evaporator.

As shown in Figure **13,** when the air supplying fan **(25)** and the air exhausting fan **(26)** are brought into operation, outside air (OA) is drawn into the main casing **(11)** through the first inlet opening **(115)** and then flows into the rear side lower passageway **(144),** while room air (RA) is drawn into the main casing **(11)** through the second inlet opening **(116)** and then flows into the rear side upper passageway **(143).** Here, the room air (RA) which has entered the rear side upper passageway **(143)** passes through the indoor filter **(123b),** during which dust particles carried by the room air (RA) are trapped.

Hereinafter, the first operation of the dehumidification mode is described by making reference to Figure **13.** In the first operation of the dehumidification mode, the opening/closing damper of each of the second upper rear opening **(152),** the first lower rear opening **(153),** the first upper front opening **(155),** and the second lower front opening **(158)** is placed in the open state, while the opening/closing damper of each of the first upper rear opening **(151),** the second lower rear opening **(154),** the second upper front opening **(156),** and the first lower front opening **(157)** is placed in the closed state.

Accordingly, outside air (OA) being distributed through the rear side lower passageway **(144)** enters the lower space of the first heat exchange chamber **(41)** from the first lower rear opening **(153).** This outside air is distributed in a direction from the lower to the upper side of the first filter **(124a),** during which airborne dust particles are trapped at the lower side of the first filter **(124a).** Thereafter, the air is passed through the inflow space of the first heat exchanger **(61)** and flows into the upper space of the first heat exchange chamber **(41).** Here, moisture present in the air is adsorbed by the adsorbent of the first heat exchanger **(61)** functioning as an evaporator. The resulting heat of adsorption is absorbed by the refrigerant in the first heat exchanger **(61).**

The air, from which dust was removed by the first filter **(124a)** and which was dehumidified by the first heat exchanger **(61)** as described above, flows into the front side upper passageway **(145)** from the first upper front opening **(155).** Then, the air is distributed through the air supplying side passageway **(131)** and is supplied through the air supplying opening **(117)** into the indoor space as humidity controlled air (SA).

On the other hand, room air (RA) being distributed through the rear side upper passageway **(143)** enters the upper space of the second heat exchange chamber **(42)** from the second upper rear opening **(152).** This room air travels downwardly and is distributed through the inflow space of the second heat exchanger **(62).** In the second heat exchanger **(62)** functioning as a condenser, the adsorbent of the second heat exchanger **(62)** is heated by the refrigerant and moisture is desorbed from the adsorbent. In the second heat exchanger **(62),** the moisture desorbed from the adsorbent is fed to the air and the adsorbent is regenerated.

The air after passage through the second heat exchanger **(62)** is distributed in a direction from the upper to the lower side of the second filter **(124b).** At this time, dust particles, trapped at the lower side of the second filter **(124b)** in the after-mentioned second operation of the dehumidification mode, are blown away therefrom by air flowing downwardly through the second filter **(124b).** In this way, removal of the dust trapped at the lower side of the second filter **(124b)** is accomplished. Then, the dust is pressure-fed to outside the second heat exchange chamber **(42)** by air which has passed through the second filter **(124b).**

The air, which was used to regenerate the adsorbent of the second heat exchanger **(62)** and which is containing dust particles removed from the second filter **(124b)** as described above, flows into the front side lower passageway **(146)** from the second lower front opening **(158).** Then the air is drawn into the suction opening of the air exhausting fan **(26)** in the lower space of the air exhausting side passageway **(132)** and is discharged, as exhaust air (EA), to the outdoor space from the air exhausting opening **(118).**

Next, the second operation of the dehumidification mode is described by making reference to Figure **14.** In the second operation of the dehumidification mode, the opening/closing damper of each of the first upper rear opening **(151),** the second lower rear opening **(154),** the second upper front opening **(156),** and the first lower front opening **(157)** is placed in the open state, while the opening/closing damper of each of the second upper rear opening **(152),** the first lower rear opening **(153),** the first upper front opening **(155),** and the second lower front opening **(158)** is placed in the closed state.

Accordingly, outside air (OA) being distributed through the rear side lower passageway **(144)** enters the lower space of the second heat exchange chamber **(42)** from the second lower rear opening **(154).** This outside air is distributed in a direction from the lower to the upper side of the second filter **(124b),** during which airborne dust particles are trapped at the lower side of the second filter **(124b).** Thereafter, the air passes through the inflow space of the second heat exchanger **(62)** and flows into the upper space of the second heat exchange chamber **(42).** Here, moisture present in the air is adsorbed by the adsorbent of the second heat exchanger **(62)** functioning as an evaporator. The resulting heat of adsorption is absorbed by the refrigerant in the second heat exchanger **(62).**

The air, from which dust was removed by the second filter **(124b)** and which was dehumidified by the second heat exchanger **(62)** as described above, flows into the front side upper passageway **(145)** from the second upper front opening **(156).** Then, the air is distributed through the air supplying side passageway **(131)** and is supplied through the air supplying opening **(117)** into the indoor space as humidity controlled air (SA).

On the other hand, room air (RA) being distributed through the rear side upper passageway **(143)** enters the upper space of the first heat exchange chamber **(41)** from the first upper rear opening **(151).** Then, this room air flows downwardly and is distributed through the inflow space of the first heat exchanger **(61).** In the first heat exchanger **(61)** functioning as a condenser, the adsorbent of the first heat exchanger **(61)** is heated by the refrigerant and moisture is desorbed from the adsorbent. In the first heat exchanger **(61),** the moisture desorbed from the adsorbent is fed to the air and the adsorbent is regenerated.

The air after passage through the first heat exchanger **(61)** is distributed in a direction from the upper to the lower side of the first filter (124a). At this time, dust particles, trapped at the lower side of the first filter **(124a)** in the aforesaid first operation, are blown away therefrom by air flowing downwardly through the first filter **(124a).** In this way, removal of the dust trapped at the lower side of the first filter **(124a)** is accomplished. Then, the dust is pressure-fed to outside the first heat exchange chamber **(41)** by air which has passed through the first filter **(124a).**

The air, which was used for regeneration of the adsorbent of the first heat exchanger **(61)** and which is carrying the dust removed from the first filter **(124a)** as described above, flows into the front side lower passageway **(146)** from the first lower front opening **(157).** Then, the air is drawn into the suction opening of the air exhausting fan **(26)** in the lower space of the air exhausting side passageway **(132)** and is discharged, as exhaust air (EA), to the outdoor space from the air exhausting opening **(118).**

### HUMIDIFICATION MODE

In a first operation of the humidification mode, the refrigerant circuit **(60)** enters a first state (i.e., the state of Figure **3(A)),** wherein the first heat exchanger **(61)** functions as a condenser while on the other hand the second heat exchanger **(62)** functions as an evaporator. In addition, in a second operation of the humidification mode, the refrigerant circuit **(60)** enters a second state (i.e., the state of Figure **3(B)),** wherein the first heat exchanger **(61)** functions as an evaporator while on the other hand the second heat exchanger **(62)** functions as a condenser.

In addition, when the air supplying fan **(25)** and the air exhausting fan (26) are brought into operation, outside air (OA) is drawn into the main casing **(11)** from the first inlet opening **(115)** and flows into the rear side lower passageway **(144)** while room air (RA) is drawn into the main casing **(11)** from the second inlet opening **(116)** and flows into the rear side upper passageway **(143).** Here, the room air (RA) which has entered the rear side upper passageway **(143)** is passed through the indoor filter **(123b),** during which dust particles present in the room air (RA) are trapped.

Hereinafter, with reference to Figure **13,** the description will be made with respect to the first operation of the humidification mode. In the first operation of the humidification mode, the opening/closing damper of each of the second upper rear opening **(152),** the first lower rear opening **(153),** the first upper front opening **(155),** and the second lower front opening **(158)** is placed in the open state, while the opening/closing damper of the first upper rear opening **(151),** the second lower rear opening **(154),** the second upper front opening **(156),** and the first lower front opening **(157)** is placed in the closed state.

Accordingly, outside air (OA) being distributed through the rear side lower passageway **(144)** enters the lower space of the first heat exchange chamber **(41)** from the first lower rear opening **(153).** This outside air is distributed in a direction from the lower to the upper side of the first filter **(124a),** during which airborne dust particles are trapped at the lower side of the first filter **(124a).** Thereafter, the air passes through the inflow space of the first heat exchanger **(61)** and flows into the upper space of the first heat exchange chamber **(41).** In the first heat exchanger **(61)** functioning as a condenser, the adsorbent of the first heat exchanger **(61)** is heated by the refrigerant and moisture is desorbed from the adsorbent. The desorbed moisture is fed to the air.

The air, from which dust was removed by the first filter **(124a)** and which was humidified by the first heat exchanger **(61)** as described above, flows into the front side upper passageway **(145)** from the first upper front opening **(155).** Then, the air is distributed through the air supplying side passageway **(131)** and is supplied through the air supplying opening **(117)** into the indoor space as humidity controlled air (SA).

On the other hand, room air (RA) being distributed through the rear side upper passageway **(143)** enters the upper space of the second heat exchange chamber **(42)** from the second upper rear opening **(152).** Then, this room air travels downwardly and is distributed through the inflow space of the second heat exchanger **(62).** Here, moisture present in the air is adsorbed by the adsorbent of the second heat exchanger **(62)** functioning as an evaporator. The resulting heat of adsorption is absorbed by the refrigerant in the second heat exchanger **(62).**

The air after passage through the second heat exchanger **(62)** is distributed in a direction from the upper to the lower side of the second filter **(124b).** At this time, dust particles, trapped at the lower side of the second filter **(124b)** in the after-mentioned second operation, are blown away therefrom by air flowing downwardly through the second filter **(124b).** In this way, removal of the dust trapped at the lower side of the second filter **(124b)** is accomplished. Then, the dust is pressure-fed to outside the second heat exchange chamber **(42)** by the air which has passed through the second filter **(124b).**

The air, which gave moisture to the adsorbent of the second heat exchanger **(62)** and which is containing dust particles removed from the second filter **(124b)** as described above, flows into the front side lower passageway **(146)** from the second lower front opening **(158).** Then, this air is drawn into the suction opening of the air exhausting fan **(26)** in the lower space of the air exhausting side passageway **(132)** and is discharged, as exhaust air (EA), to the outdoor space from the air exhausting opening **(118).**

Next, the description will be made with respect to the second operation of the humidification mode by making reference to Figure **14.** In the second operation of the humidification mode, the opening/closing damper of each of the first upper rear opening **(151),** the second lower rear opening **(154),** the second upper front opening **(156),** and the first lower front opening **(157)** is placed in the open state, while the opening/closing damper of each of the second upper rear opening **(152),** the first lower rear opening **(153),** the first upper front opening **(155),** and the second lower front opening **(158)** is placed in the closed state.

Accordingly, outside air (OA) being distributed through the rear side lower passageway **(144)** enters the lower space of the second heat exchange chamber **(42)** from the second lower rear opening **(154).** This outside air is distributed in a direction from the lower to the upper side of the second filter **(124b),** during which airborne dust particles are trapped at the lower side of the second filter **(124b).** Thereafter, the air passes through the inflow space of the second heat exchanger **(62)** and flows into the upper space of the second heat exchange chamber **(42).** In the second heat exchanger **(62)** functioning as a condenser, the adsorbent of the second heat exchanger **(62)** is heated by the refrigerant and moisture is desorbed from the adsorbent. The moisture desorbed from the adsorbent is fed to the air.

The air, from which dust was removed by the second filter **(124b)** and which was humidified by the second heat exchanger **(62)** as described above, flows into the front side upper passageway **(145)** from the second upper front opening **(156).** Then, this air is distributed through the air supplying side passageway **(131)** and is supplied through the air supplying opening **(117)** to the indoor space as humidity controlled air (SA).

On the other hand, room air (RA) being distributed through the rear side upper passageway **(143)** enters the upper space of the first heat exchange chamber **(41)** from the first upper rear opening **(151).** Then, this room air flows downwardly and is distributed through the inflow space of the first heat exchanger **(61).** Here, moisture present in the air is adsorbed by the adsorbent of the first heat exchanger **(61)** functioning as an evaporator. The resulting heat of adsorption is absorbed by the refrigerant in the first heat exchanger **(61).**

The air after passage through the first heat exchanger **(61)** is distributed in a direction from the upper to the lower side of the first filter **(124a).** At this time, dust particles, trapped at the lower side of the first filter **(124a)** in the aforesaid first operation, are blown away therefrom by air flowing downwardly through the first filter **(124a).** In this way, removal of the dust trapped at the lower side of the first filter **(124a)** is accomplished. Then, the dust is pressure-fed to outside the first heat exchange chamber **(41)** by air which has passed through the first filter **(124a).**

The air, which gave moisture to the adsorbent of the first heat exchanger **(61)** and which is containing dust removed from the first filter **(124a)** as described above, flows into the front side lower passageway **(146)** from the first lower front opening **(157).** Then, this air is drawn into the suction opening of the air exhausting fan **(26)** in the lower space of the air exhausting side passageway **(132)** and is discharged, as exhaust air (EA), to the outdoor space from the air exhausting opening **(118).**

### ADVANTAGEOUS EFFECTS OF THE FIFTH EMBODIMENT

In the humidity control system **(10)** of the present embodiment, the outdoor filter **(124)** is arranged and formed along both the inflow surface of the first heat exchanger **(61)** and the inflow surface of the second heat exchanger **(62),** thereby making it possible to reduce the rise in pressure loss due to the installation of the outdoor filter **(124).** In addition, dust particles adhering to the outdoor filter **(124)** are automatically removed therefrom by the use of room air (RA), thereby making it possible to reduce the frequency of maintenance and replacement of the outdoor filter **(124).**

Furthermore, in the present embodiment, the first and second take-out openings **(161a, 161b)** are provided in the right lateral plate **(110a)** of the main casing **(11).** Consequently, as shown in Figure 15, the indoor filter **(123b)** can be taken out of the main casing **(11)** from the first take-out opening **(161a)** for the purpose of maintenance and the outdoor filter **(124)** can be taken out of the main casing **(11)** from the second take-out opening **(161b)** for the purpose of maintenance. This therefore facilitates the maintenance and replacement of each of the filters **(123b, 124).**

### OTHER EMBODIMENTS

The humidity control system **(10)** of the third embodiment (Figure **10)** may be of a so-called "cassette" type in which, in the bottom plate (not shown) of the main casing **(11),** the supply air outlet opening **(24)** is formed under the air supplying fan **(25)** and, in addition, the inside air inlet opening **(22)** is formed under the second air inflow path **(45).**

In the above case, it suffices if the outside air inlet duct **(71)** is fluidly connected to the outside air inlet opening **(21)** of the fourth lateral plate **(15)** in the main casing **(11)** and the exhaust air outlet duct (73) is fluidly connected to the exhaust air outlet opening **(23).** This eliminates the need for the provision of the ducts **(72, 74)** in fluid communication with the room, thereby making it possible to make more efficient use of the under-roof space.

In addition, in regard to the humidity control systems **(10)** of the foregoing embodiments, their respective main casings **(11)** may be installed not under the roof but on the floor.

In addition, in each of the foregoing embodiments, the compressor unit **(91)** is installed outdoors, but the compressor unit **(91)** may be placed in any indoor area where sound causes little or no annoyance. The compressor unit **(91)** may be installed, for example, in a machine room which accommodates equipment or in an under-roof space at a distance from the living enclosure of daily use. Also in such a case, the noise of the compressor **(63)** can be confined within the compressor casing **(92).**

In addition, in the foregoing embodiments, the four-way valve **(64)** is used as a reversal mechanism. Alternatively, it may be arranged such that the circulation direction of refrigerant is reversed by a reverse mechanism made up of four electromagnetic valves connected in bridge configuration.

In addition, in each of the foregoing embodiments, the first and second heat exchangers **(61, 62)** are formed by fin and tube heat exchangers of the cross fin type. Other than this type of heat exchanger may be used, for example, corrugated fin heat exchangers.

### INDUSTRIAL APPLICABILITY

As has been described above, the present invention is useful for humidity control systems which perform refrigeration cycles for the regeneration and cooling of adsorbent.

## Claims

1. A humidity control system for supplying either one of a dehumidified first air stream and a humidified second air stream to an indoor space and for discharging the other air stream to an outdoor space, the humidity control system comprising:
a refrigerant circuit **(60)** which includes first and second adsorbent-supported heat exchangers **(61, 62)** which are fluidly connected in the refrigerant circuit **(60)** to perform a refrigeration cycle, and which is capable of reversing the circulation direction of refrigerant;
a main unit **(90)** which includes: a main casing **(11)** having therein an air passageway in which the heat exchangers **(61, 62)** are disposed; and a switching mechanism for changing the distribution route of air in the main casing **(11)** depending on the circulation direction of refrigerant in the refrigerant circuit **(60)** so that the first air stream is passed through one of the heat exchangers **(61, 62)** that is functioning as an evaporator while the second air stream is passed through the other heat exchanger that is functioning as a condenser; and
a compressor unit **(91)** which is disposed outside the main casing **(11)** and in which a compressor **(63)** of the refrigerant circuit (60) is provided.

2. The humidity control system of claim 1, wherein the compressor unit **(91)** houses therein a reversal mechanism **(64)** for reversing the circulation direction of refrigerant in the refrigerant circuit **(60).**

3. The humidity control system of claim 2, wherein the compressor unit **(91)** houses therein an expansion mechanism **(65)** of the refrigerant circuit **(60).**

4. The humidity control system of claim 1, wherein the compressor unit **(91)** is installed outdoors.

5. The humidity control system of claim 1, wherein the compressor unit **(91)** is installed in an indoor machinery room.

6. The humidity control system of claim 1, wherein the compressor unit **(91)** is covered with a compressor casing **(92)** which is shaped like a hermetically-sealed container.

7. The humidity control system of claim 1, wherein:
the main casing **(11)** is shaped like a flattened box; and
an air supplying fan **(25)** and an air exhausting fan **(26)** for introduction of air into the main casing **(11)** are each formed by a respective multi-blade fan which is configured to draw in air from a lateral side of a fan casing thereof and then deliver it forward, and which is disposed such that the center of axle of its impeller is oriented in the thickness direction of the main casing **(11).**

8. The humidity control system of claim 1, wherein the first and second heat exchangers **(61, 62)** are arranged such that air flows in the thickness direction of the main casing **(11).**

9. The humidity control system of claim 1, wherein, in the main casing **(11),** an outlet opening **(24)** and an inlet opening **(22)** are opened to provide fluid connection with ducts **(72, 74)** in fluid communication with the indoor space and an outlet opening **(23)** and an inlet opening **(21)** are opened to provide fluid connection with ducts **(71, 73)** in fluid communication with the outdoor space.

10. The humidity control system of claim 9, wherein the humidity control system is installed in an under-roof space.

11. The humidity control system of claim 9, wherein the humidity control system is installed on an indoor floor area.

12. The humidity control system of claim 1, wherein, in the main casing **(11),** an outlet opening **(24)** and an inlet opening **(22)** are opened to provide direct fluid communication between the main casing **(11)** and the indoor space and an outlet opening **(23)** and an inlet opening **(21)** are opened to provide fluid connection with ducts **(71, 73)** in fluid communication with the outdoor space.

13. The humidity control system of claim 1, wherein:
the humidity control system includes an air supplying fan (25) and an air exhausting fan **(26)** which are disposed in the main casing **(11);**
the main casing **(11)** is shaped like a box;
the main casing **(11)** has an internal space which is divided into a first space **(17)** defined along a fan side lateral plate **(13)** as a lateral plate of the main casing **(11),** and a remaining second space **(18);** and
the air supplying fan **(25)** and the air exhausting fan **(26)** are disposed in the first space **(17)** and the first and second heat exchangers **(61, 62)** and the switching mechanism are disposed in the second space **(18).**

14. The humidity control system of claim 13, wherein:
an air supplying opening **(24)** and an inside air inlet opening **(22)** which are in fluid communication with the indoor space are provided in one of lateral plates **(14, 15)** of the main casing **(11)** orthogonal to the fan side lateral plate **(13),** and an air exhausting opening **(23)** and an outside air inlet opening **(21)** which are in fluid communication with the outdoor space are provided in the other of the lateral plates **(14, 15);**
in the second space **(18),** a first heat exchange chamber **(41)** in which the first heat exchanger **(61)** is accommodated and a second heat exchange chamber **(42)** in which the second heat exchanger **(62)** is accommodated are defined adjacently side by side in a direction orthogonal to the fan side lateral plate **(13);**
a first air inflow path **(43)** and a first air outflow path **(44),** and a second air inflow path **(45)** and a second air outflow path **(46)** are further provided in the second space **(18),** wherein the first air inflow path **(43)** and the first air outflow path **(44)** extend along one of a pair of lateral plates **(32, 33)** facing both the first heat exchange chamber **(41)** and the second heat exchange chamber **(42)** and are superimposedly arranged in the thickness direction of the main casing **(11)** and wherein the second air inflow path **(45)** and the second air outflow path **(46)** extend along the other of the pair of lateral plates **(32, 33)** and are superimposedly arranged in the thickness direction of the main casing **(11);** and
the outflow paths **(44, 46)** are in fluid communication with the first space **(17)** through fan side communication openings **(75, 76).**

15. The humidity control system of claim 13, wherein:
an air supplying opening **(24)** in fluid communication with the indoor space and an air exhausting opening **(23)** in fluid communication with the outdoor space are provided in the fan side lateral plate **(13)** of the main casing **(11)** and an inside air inlet opening **(22)** and an outside air inlet opening **(21)** are provided in a lateral plate **(12)** opposite the fan side lateral plate **(13);**
in the second space **(18),** a first heat exchange chamber **(41)** in which the first heat exchanger **(61)** is accommodated and a second heat exchange chamber **(42)** in which the second heat exchanger **(62)** is accommodated are defined adjacently side by side in the longitudinal direction of the fan side lateral plate **(13);**
a first air inflow path **(43)** and a second air inflow path **(45),** and a first air outflow path **(44)** and a second air outflow path **(46)** are further provided in the second space **(18),** wherein, between one of a pair of lateral plates **(32, 33)** facing both the first heat exchange chamber **(41)** and the second heat exchange chamber **(42)** and the lateral plate **(12)** opposite the fan side lateral plate **(13),** the first air inflow path **(43)** and the second air inflow path **(45)** extend along the lateral plate **(12)** and are superimposedly arranged in the thickness direction of the main casing **(11),** and wherein, between the other of the pair of lateral plates **(32, 33)** and the fan side lateral plate **(13),** the first air outflow path **(44)** and the second air outflow path **(46)** extend along the fan side lateral plate **(13)** and are superimposedly arranged in the thickness direction of the main casing **(11);** and
the outflow paths **(44, 46)** are in fluid communication with the first space **(17)** through fan side communication openings **(75, 76).**

16. The humidity control system of claim 13, wherein the air supplying fan **(25)** and the air exhausting fan **(26)** are each formed by a respective multi-blade fan which is configured to draw in air from a lateral side of a fan casing thereof and then deliver it forward and which is disposed such that the center of axle of its impeller is oriented in the thickness direction of the main casing **(11).**

17. The humidity control system of claim 16, wherein the air supplying fan **(25)** is arranged such that an inlet opening **(27),** provided in the lateral side of the fan casing of the air supplying fan **(25),** faces either one of the fan side communication openings **(75, 76);** and
the air exhausting fan **(26)** is arranged such that an inlet opening **(28),** provided in the lateral side of the fan casing of the air exhausting fan **(26),** faces the other of the fan side communication openings **(75, 76).**

18. The humidity control system of claim 13, wherein a piping arrangement of the refrigerant circuit **(60)** for fluid connection with the first and second heat exchangers **(61, 62)** is provided along a top plate of the main casing **(11).**

19. The humidity control system of claim 1, wherein the humidity control system includes an outdoor filter **(124)** which is arranged and formed along both an outside air inflow surface of the first heat exchanger **(61)** and an outside air inflow surface of the second heat **exchanger (62).**

20. The humidity control system of claim 19, wherein:
a first passageway **(41)** in which the first heat exchanger **(61)** is disposed and a second passageway **(42)** in which the second heat exchanger **(62)** is disposed are formed in the main casing **(11);** and
the outdoor filter **(124)** comprises a first filter part **(124a)** disposed in the first passageway **(41)** and a second filter part **(124b)** disposed in the second passageway **(42).**

21. The humidity control system of claim 19, wherein:
in the outdoor filter **(124),** the first filter part **(124a)** and the second filter part **(124b)** are integral with each other; and
the outdoor filter **(124)** is arranged such that it extends over both the outside air inflow surface of the first heat exchanger **(61)** and the outside air inflow surface of the second heat exchanger **(62).**

22. The humidity control system of claim 21, wherein, in the main casing **(11),** the first heat exchanger **(61)** and the second heat exchanger **(62)** are disposed adjacently to each other and the inflow surface of the first heat exchanger **(61)** and the inflow surface of the second heat exchanger **(62)** lie on approximately the same plane.

23. The humidity control system of claim 19, wherein the main casing **(11)** is provided with a take-out opening **(161)** from which the outdoor filter **(124)** can be taken out.

24. The humidity control system of claim 20, wherein the humidity control system is operable to switch its operation between a first operation in which outside air is distributed first through the first filter part **(124a)** and then through the first heat exchanger **(61)** and is thereafter supplied to the indoor space while simultaneously room air is distributed first through the second heat exchanger **(62)** and then through the second filter part **(124b)** and is thereafter expelled to the outside space, and a second operation in which outside air is distributed first through the second filter part **(124b)** and then through the second heat exchanger **(62)** and is thereafter supplied to the indoor space while simultaneously room air is distributed first through the first heat exchanger **(61)** and then through the first filter part (124a) and is thereafter expelled to the outdoor space.

25. The humidity control system of claim 20, wherein:
the humidity control system includes an indoor filter **(123b)** which is disposed in a passageway through which room air is made to flow into either of the first or the second passageways **(41, 42);** and
the humidity control system is operable to switch its operation between a first operation in which outside air is distributed first through the first filter part **(124a)** and then through the first heat exchanger **(61)** and is thereafter supplied to the indoor space while simultaneously room air is distributed first through the indoor filter **(123b),** then through the second heat exchanger **(62),** and then through the second filter part **(124b)** and is thereafter expelled to the outside space, and a second operation in which outside air is distributed first through the second filter part **(124b)** and then through the second heat exchanger **(62)** and is thereafter supplied to the indoor space while simultaneously room air is distributed first through the indoor filter **(123b),** then through the first heat exchanger **(61),** and then through the first filter part **(124a)** and is thereafter expelled to the outdoor space.

26. The humidity control system of either claim 1 or claim 19, wherein:
a first passageway **(41)** in which the first heat exchanger **(61)** is disposed, a second passageway **(42)** in which the second heat exchanger **(62)** is disposed, and a room air supplying passageway through which room air is made to flow into either of the first or the second passageways **(41, 42)** are formed in the main casing **(11);** and
the humidity control system includes an indoor filter **(123b)** which is disposed in the room air supplying passageway.

27. The humidity control system of either claim 1 or claim 19, wherein:
a first passageway **(41)** in which the first heat exchanger **(61)** is disposed and a second passageway **(42)** in which the second heat exchanger **(62)** is disposed are formed in the main casing **(11);** and
the humidity control system includes:
a suction opening **(163)** which faces the indoor space by being in fluid connection with an air passageway which is located nearer to the indoor space than the first and second passageways **(41, 42)** in the main casing **(11);** and
an indoor filter **(123b)** which is disposed in the vicinity of an opening part of the suction opening **(163).**
